# EUROPÄISCHE PATENTSCHRIFT

(11) **EP 4 489 887 B1**
(45) Veröffentlichungstag und Bekanntmachung des Hinweises auf die Patenterteilung: **02.09.2026**
(21) Anmeldenummer: 23712812.9
(22) Anmeldetag: 08.03.2023
(51) Int. Cl.: B01D 15/16, G01N 30/54

(54) **SYSTEM UND VERFAHREN ZUR TRENNUNG VON STOFFEN IN EINEM STOFFGEMISCH**
SYSTEM AND METHOD FOR SEPARATING SUBSTANCES IN A SUBSTANCE MIXTURE
SYSTÈME ET PROCÉDÉ DE SÉPARATION SERVANT À SÉPARER DES SUBSTANCES DANS UN MÉLANGE DE SUBSTANCES

(30) Priorität: 09.03.2022 DE 102022105562
(43) Veröffentlichungstag der Anmeldung: 15.01.2025
(73) Patentinhaber: Chromalux UG, 86633 Neuburg an der Donau (DE)
(72) Erfinder: WOLF, Jan-Christoph, 85049 Ingolstadt (DE)
(74) Vertreter: Ter Meer Steinmeister & Partner
(86) Internationale Anmeldenummer: PCT/EP2023/055902
(87) Internationale Veröffentlichungsnummer: WO 2023/170155

(56) Entgegenhaltungen:
- DE-A1- 102019 200 109
- US-A- 5 135 549
- US-A- 5 808 178
- US-A1- 2010 005 867

## Beschreibung

### Technisches Gebiet

Die vorliegende Offenbarung betrifft ein System zur Trennung von Stoffen in einem Stoffgemisch. Weiterhin betrifft die vorliegende Offenbarung ein Verfahren zur Trennung von Stoffen in einem Stoffgemisch sowie ein Verfahren zur Analyse von Stoffen in einem Stoffgemisch. Ein weiterer Aspekt der vorliegenden Offenbarung betrifft eine Trennsäule zur Trennung von Stoffen in einem Stoffgemisch.

### Technischer Hintergrund

Trennsäulen zur Auftrennung von Stoffgemischen sind aus dem Stand der Technik bekannt. Auf eine Trennsäule kann das Stoffgemisch aufgegeben werden, um Stoffe in dem Stoffgemisch aufzutrennen. In der Regel werden die Stoffgemische gemeinsam mit einem Trägerfluid (Gas oder Flüssigkeit) auf die Trennsäule aufgegeben und durch einen Druckgradienten von einem Einlass der Trennsäule entlang der Trennsäule zu einem Auslass der Trennsäule geführt. Dabei wechselwirken (Adsorption) verschiedene Stoffe des Stoffgemisches unterschiedlich stark mit der Trennsäule bzw. einem Trennsäulenmaterial, sodass die Stoffe des Stoffgemisches zu unterschiedlichen Zeitpunkten aus dem Auslass der Trennsäule austreten. Am Auslass der Trennsäule kann ein Detektor zur Analyse der Stoffe angeordnet sein.

Typischerweise sind die Trennsäulen in einem Säulenofen angeordnet. Während das Stoffgemisch entlang der Trennsäule geführt wird, wird die Temperatur in dem Ofen oft erhöht, um das Gleichgewicht der Wechselwirkung der Stoffe des Stoffgemisches in Richtung Desorption zu verschieben. Durch eine Temperaturerhöhung wird also typischerweise eine Desorption von Stoffen des Stoffgemisches gefördert, sodass die Stoffe mit dem Trägerfluid geführt werden. Dabei kann zwischen dem Zeitpunkt der Aufgabe des Stoffgemisches auf die Trennsäule (Startzeitpunkt) und dem Zeitpunkt des Auslasses der Stoffe des Stoffgemisches von der Trennsäule (Endzeitpunkt) ein großer Temperaturunterschied, beispielsweise 300 °C, bestehen. Für eine nachfolgende Auftrennung muss der Säulenofen wieder auf die Temperatur für den Startzeitpunkt abgekühlt werden. Je nach Temperatur des Startzeitpunkts und der Kühlmöglichkeiten des Säulenofens, kann ein beträchtlicher Zeitraum notwendig sein, um den Säulenofen abzukühlen und das System für eine nächste Auftrennung einsatzbereit zu machen.

Aus DE 197 07 114 C1 ist ein Gaschromatograph bekannt, bei dem eine Heizlampe verwendet wird, um die Trennsäule zu erwärmen.

US 2007/009241 A1 betrifft ein Gaschromatographiesystem umfassend eine Strahlungsquelle, einen Einsatz, der so angeordnet ist, dass er einen Ausgang der Strahlungsquelle aufnimmt, und eine analytische Säule, die auf eine konkave Oberfläche des Einsatzes gewickelt ist, sodass aufeinanderfolgende Windungen der gewickelten analytischen Säule in direktem Kontakt miteinander stehen und einen nach außen gerichteten Druck auf die konkave Oberfläche des Einsatzes ausüben, sodass der nach außen gerichtete Druck einen Spalt zwischen der analytischen Säule und der konkaven Oberfläche des Einsatzes minimiert, um thermische Gradienten zu minimieren und die Wärmeübertragung auf die analytische Säule zu maximieren.

### Zusammenfassung der Offenbarung

Eine Aufgabe der Erfindung liegt darin, eine schnelle und gleichzeitig mit hoher Auflösung durchführbare Trennung von Stoffen in einem Stoffgemisch bereitzustellen. Eine weitere Aufgabe der Erfindung liegt darin, eine Handhabung einer Trennsäule, beispielsweise einen Austausch einer Trennsäule und/oder eine Lagerung einer Trennsäule, zu erleichtern und/oder zu beschleunigen.

Zumindest eine der Aufgaben wird durch die Merkmalskombination der unabhängigen Ansprüche gelöst. Bevorzugte Ausführungsformen sind in den abhängigen Ansprüchen definiert.

Offenbart ist ein System zur Trennung von Stoffen in einem Stoffgemisch, das System mit einer Strahlungsquelle und einer Trennsäule, wobei: die Trennsäule zumindest einen ersten Abschnitt aufweist, wobei der erste Abschnitt zumindest einen ersten Subabschnitt und einen zweiten Subabschnitt aufweist; die Strahlungsquelle eingerichtet ist, elektromagnetische Strahlung in Richtung des ersten Abschnitts zu strahlen, um den ersten Abschnitt zu erwärmen, wobei die elektromagnetische Strahlung Infrarotstrahlung umfasst; und die elektromagnetische Strahlung in dem ersten Subabschnitt der Trennsäule mit einer höheren Intensität empfangbar ist als in dem zweiten Subabschnitt der Trennsäule, sodass der erste Subabschnitt stärker erwärmbar ist als der zweite Subabschnitt und entlang des ersten Abschnitts der Trennsäule ein Temperaturgradient bildbar ist, wobei der erste Abschnitt der Trennsäule die Strahlungsquelle umgibt, wobei der erste Abschnitt eine Länge entlang der Trennsäule von zumindest 500 mm aufweist und die elektromagnetische Strahlung in dem ersten Abschnitt der Trennsäule so empfangbar ist, dass sich der Temperaturgradient entlang des ersten Abschnitts einstellt.

Dadurch, dass die elektromagnetische Strahlung mit unterschiedlicher Intensität von unterschiedlichen Abschnitten der Trennsäule empfangen wird, bildet sich ein Temperaturgradient entlang der Trennsäule. Dieser Temperaturgradient führt zu einer konstanten Refokussierung der Stoffe während der Trennung und bewirkt eine bessere Trennleistung. Dadurch kann das System mit kürzeren Säulen dieselbe Trennleistung wie ein konventionelles System erreichen, aber in wesentlich kürzeren Analysezeiten.

Zusätzlich kann innerhalb des offenbarten Systems lediglich die Trennsäule direkt geheizt werden, wodurch sich eine geringe thermische Masse ergibt, was eine rasche Abkühlung ermöglicht. Weiterhin kann sofort mit Abschalten der Strahlungsquelle die Heizleistung erlöschen. Ebenso kann die Heizung auf Grundlage elektromagnetischer Strahlung eine komplexe Geometrie der Trennsäule (komplexe Säulenführung) ermöglichen. In der Trennsäule kann auch lediglich abschnittsweise ein Temperaturgradient ermöglicht werden.

Da die Trennsäule im Unterschied zur resistiven Beheizung nicht mit dem Heizelement verbunden ist, ist ein Austausch der Trennsäule einfacher und unkomplizierter möglich als in bekannten Systemen.

Die Trennsäule kann in einer Chiphalterung gelagert sein. Die Chiphalterung ermöglicht einen schnellen und werkzeugfreien Austausch der Trennsäule. Dies erleichtert die Handhabung und ermöglicht auch den Einsatz unterschiedlicher selektiver Phasen, Säulenlängen und/oder Materialien. Bekannte schnelle Stoffauftrennungssysteme (beispielsweise Gaschromatographiesysteme) sind hier teils stark limitiert, insbesondere hinsichtlich der Trennsäulenlänge, des Trennsäulendurchmessers und/oder des Trennsäulenmaterials. So können in manchen Stoffauftrennungssystemen lediglich Metallsäulen eingesetzt werden.

Durch die Verwendung von elektromagnetischer Strahlung als Heizquelle kann weiterhin der Platzbedarf reduziert werden. Dies ermöglicht eine kompakte Bauform. Bekannte Stoffauftrennungssysteme (z.B. gaschromatographische System) haben teilweise einen hohen Platzbedarf. Die kompakte Bauform ermöglicht einen mobilen Einsatz des offenbarten Systems, beispielsweise bei der vor-Ort-Gefahrenstoffdetektion oder der Betäubungsmitteldetektion. Allgemein kann das System ein gaschromatographisches System sein. Das Stoffgemisch kann zumindest teilweise gasförmig vorliegen. Insbesondere ist das Stoffgemisch in der Trennsäule zumindest teilweise und/oder zumindest zeitweise gasförmig.

Über einen Einlass der Trennsäule kann ein Trägergas auf die Trennsäule aufbringbar sein. Das Trägergas kann Wasserstoff (H₂), Helium (He), Stickstoff (N₂), Argon (Ar), und/oder Kohlenstoffdioxid (CO₂) sein. Insbesondere ist das Trägergas ein inertes Gas.

Das Stoffgemisch kann auf die Trennsäule aufgebracht werden, beispielsweise über einen Injektor. Bevorzugt wird die Trennsäule von dem Trägergas durchströmt und das Stoffgemisch wird in den Strom des Trägergases eingebracht, um von dem Trägergas entlang der Trennsäule transportiert zu werden.

Das Stoffgemisch kann zumindest zwei zu trennende Stoffe umfassen. Das Stoffgemisch kann ebenso eine Vielzahl von Stoffen umfassen. Die Stoffe können sich chemisch und/oder physikalisch unterscheiden. Beispielsweise sind die Stoffe unterschiedliche Moleküle. Zumindest zwei der Stoffe in dem Stoffgemisch können von dem System auftrennbar sein. D.h. nicht alle Stoffe des Stoffgemisches müssen von der Trennsäule aufgetrennt werden. Allgemein kann eine Trennung von Stoffen in dem Stoffgemisch bedeuten, dass das Stoffgemisch mit den Stoffen zu einem (gleichen) Zeitpunkt auf die Trennsäule aufgegeben wird und die zu trennenden Stoffe bzw. die getrennten Stoffe zu unterschiedlichen Zeitpunkten aus der Trennsäule ausströmen.

Die Strahlungsquelle erzeugt elektromagnetische Strahlung, insbesondere um zumindest den ersten Abschnitt der Trennsäule zu bestrahlen oder elektromagnetische Strahlung in Richtung zumindest des ersten Abschnitts der Trennsäule auszusenden. Die Strahlungsquelle kann eine Lampe, insbesondere eine Heizlampe, sein. Die elektromagnetische Strahlung umfasst Licht im infraroten Wellenlängenbereich (Wellenlänge zwischen 780 nm und 1 mm). Die elektromagnetische Strahlung kann Licht im sichtbaren Wellenlängenbereich (Wellenlänge zwischen 380 nm und 780 nm) umfassen. Alternativ kann die elektromagnetische Strahlung Licht außerhalb des sichtbaren Wellenlängenbereichs umfassen. Insbesondere liegt ein Intensitätsmaximum der elektromagnetischen Strahlung im infraroten Wellenlängenbereich, im sichtbaren Wellenlängenbereich oder außerhalb des sichtbaren Wellenlängenbereichs.

Die Strahlungsquelle kann eine Leistung von zumindest 1 W (Watt), bevorzugter zumindest 5 W, bevorzugter zumindest 10 W, bevorzugter zumindest 25 W, bevorzugter zumindest 50 W, bevorzugter zumindest 75 W, bevorzugter zumindest 100 W, aufweisen. Insbesondere weist die Strahlungsquelle eine Leistung zwischen 1 W und 1000 W, bevorzugt zwischen 5 W und 500 W, bevorzugter zwischen 5 W und 250 W, bevorzugter zwischen 5 W und 100 W, auf. Die Strahlungsquelle kann durch elektrische Energie antreibbar sein, um die elektromagnetische Strahlung zu erzeugen. Mit anderen Worten, die Strahlungsquelle kann eingerichtet sein, elektrische Energie in elektromagnetische Strahlung umzuwandeln.

Die Strahlungsquelle kann stabförmig ausgebildet sein. Bevorzugt ist die Strahlungsquelle eingerichtet, elektromagnetische Strahlung in einem Umfangswinkelbereich von zumindest 180 °, bevorzugt zumindest 270 °, bevorzugter zumindest 330 °, auszustrahlen. Besonders bevorzugt ist die Strahlungsquelle eingerichtet, elektromagnetische Strahlung im Wesentlichen (±10 % oder ±5 %) über dessen gesamten Umfang auszustrahlen.

Die Strahlungsquelle kann eine größere Längserstreckung als Quererstreckung aufweisen. In einem Zylinderkoordinatensystem kann die Längserstreckung die z-Richtung sein und die Quererstreckung kann die r-Richtung sein. Insbesondere ist die Längserstreckung der Strahlungsquelle zumindest 1,5-fach, bevorzugt zumindest 2,0-fach, bevorzugter zumindest 3,0-fach, bevorzugter zumindest 4,0-fach, bevorzugter zumindest 5,0-fach, so groß wie die Quererstreckung der Strahlungsquellen. Wenn die Längserstreckung 10 mm beträgt und die Längserstreckung zumindest 1,5-fach so groß wie Quererstreckung ist, beträgt die Quererstreckung zumindest 15 mm.

Die Strahlungsquelle kann flächig ausgebildet sein. Die Strahlungsquelle kann eine Seite aufweisen, die eingerichtet ist, elektromagnetische Strahlung auszusenden. Eine dieser Seite gegenüberliegende Seite kann nicht eingerichtet sein, elektromagnetische Strahlung auszusenden. Die Strahlungsquelle kann eingerichtet sein, elektromagnetische Strahlung ausgehen von genau einer Seite auszustrahlen. Die Strahlungsquelle kann eine Rundlampe, ein Flächenstrahler oder ein Lampenarray sein. Die Seite der Strahlungsquelle, von der elektromagnetische Strahlung aussendbar ist, kann im Wesentlichen (±10 % oder ±5 %) ebenflächig ausgebildet sein.

Allgemein kann die Fläche oder die Seite der Strahlungsquelle, von der elektromagnetische Strahlung aussendbar ist, eine Fläche von zumindest 100 mm², bevorzugt zumindest 250 mm², bevorzugter zumindest 500 mm², bevorzugter zumindest 750 mm², bevorzugter zumindest 1000 mm², aufweisen. Die Fläche oder die Seite der Strahlungsquelle, von der elektromagnetische Strahlung aussendbar ist, kann alternativ oder zusätzlich eine Fläche von höchstens 10000 mm², bevorzugt höchstens 7500 mm², bevorzugter höchstens 5000 mm², bevorzugter höchstens 2500 mm², bevorzugter höchstens 1000 mm², aufweisen.

Die Strahlungsquelle kann eingerichtet sein, zu unterschiedlichen Zeitpunkten elektromagnetische Strahlung mit einer unterschiedlichen Leistung auszusenden. Die Leistung der von der Strahlungsquelle ausgesendeten elektromagnetischen Strahlung kann steuerbar sein, insbesondere durch eine Steuervorrichtung oder einen Controller des Systems. Beispielsweise kann die Strahlungsquelle elektromagnetische Strahlung mit einer niedrigeren Leistung aussenden, wenn das Stoffgemisch auf die Trennsäule gegeben wird, und die Strahlungsquelle kann elektromagnetische Strahlung mit einer höheren Leistung aussenden, nachdem das Stoffgemisch auf die Trennsäule gegeben wurde. Die Strahlungsquelle kann eingerichtet sein, ein Temperaturprofil oder ein Temperaturprogram in der Trennsäule zu erzeugen. Bei einem Temperaturprofil oder einem Temperaturprogram kann die Temperatur an einem Ort der Trennsäule zu unterschiedlichen Zeitpunkten verschieden sein. In der Trennsäule kann ein (zeitliches) Temperaturprofil oder Temperaturprogram durch die Strahlungsquelle erzeugbar sein.

Die Erwärmung der Trennsäule kann zu zumindest 80 %, bevorzugt zu zumindest 85 %, bevorzugter zu zumindest 90 %, bevorzugter zu zumindest 95 %, bevorzugter zu zumindest 98 %, durch die (elektromagnetische Strahlung der) Strahlungsquelle erfolgen. Insbesondere erfolgt die Erwärmung der Trennsäule vollständig oder ausschließlich durch die (elektromagnetische Strahlung der) Strahlungsquelle.

Die Trennsäule kann nicht durch Konduktion und/oder nicht durch Konvektion erwärmbar sein oder erwärmt werden.

Die Trennsäule kann eine Kapillare sein, insbesondere eine Schichtkapillare (PLOT-Säule, porous layer open tubular column), eine trägerbeschichtete Kapillare (SCOT-Säule, supportcoated open tubular column), eine Dünnfilm-Kapillare (WCOT-Säule, wall-coated open tubular column) oder eine FSOT-Säule (fused-silica open tubular column). Die Trennsäule kann eine gepackte oder ungepackte Trennsäule sein. Die Trennsäule kann eine polare oder eine unpolare Trennsäule sein. Die Trennsäule kann innen mit einer stationären Phase beschichtet sein. Die Trennsäule kann rohrförmig oder kapillarförmig ausgebildet sein.

Der Innendurchmesser der Trennsäule kann zwischen 0,01 mm und 5,0 mm, bevorzugt zwischen 0,01 mm und 3,0 mm, bevorzugter zwischen 0,05 mm und 1,0 mm bevorzugter zwischen 0,05 mm und 0,80 mm, bevorzugter zwischen 0,10 mm und 0,32 mm, betragen. Die Länge der Trennsäule kann zumindest 10 cm, bevorzugt zumindest 30 cm, bevorzugter zumindest 50 cm, bevorzugter zumindest 1,0 m, bevorzugter zumindest 2,5 m, bevorzugter zumindest 5 m, bevorzugter zumindest 10 m, bevorzugter zumindest 15 m, betragen. Alternativ oder zusätzlich kann die Länge der Trennsäule höchstens 100 m, bevorzugt höchstens 75 m, bevorzugter höchstens 50 m, bevorzugter höchstens 25,0 m, bevorzugter höchstens 15,0 m, bevorzugter höchstens 5,0 m, bevorzugter höchstens 2,5 m, betragen. Insbesondere beträgt die Länge der Trennsäule zwischen 2,0 m und 20,0 m, bevorzugt zwischen 3,0 m und 15,0 m.

Die Trennsäule weist zumindest einen ersten Abschnitt auf. Der erste Abschnitt kann zumindest 30 %, bevorzugt zumindest 40 %, bevorzugter zumindest 50 %, bevorzugter zumindest 60 %, bevorzugter zumindest 70 %, bevorzugter zumindest 80 %, bevorzugter zumindest 90 %, der Gesamtlänge der Trennsäule betragen. Der erste Abschnitt kann gewickelt sein, insbesondere um eine zentrale Achse der Trennsäule. Der erste Abschnitt kann wendelförmig oder helixförmig gewickelt sein. Alternativ kann der erste Abschnitt spiralförmig gewickelt sein. Bei einer wendelförmigen oder helixförmigen Wicklung kann sich die Höhenlage des ersten Abschnitts der Trennsäule mit zunehmender Säulenlänge verändern (vergrößern oder verkleinern). Bei einer spiralförmigen Wicklung kann sich die Höhenlage des ersten Abschnitts der Trennsäule mit zunehmender Säulenlänge nicht verändern. Mit anderen Worten, bei einer spiralförmigen Wicklung kann der erste Abschnitt im Wesentlichen in einer Ebene gewickelt sein. Bei einer helixförmigen oder wendelförmigen Wicklung kann der erste Abschnitt sich senkrecht zu einer Ebene nach oben oder unten erstrecken. Ist der erste Abschnitt wendelförmig oder helixförmig gewickelt, kann eine Höhe des ersten Abschnitts zumindest 1,0 mm, bevorzugt zumindest 5 mm, bevorzugter zumindest 10 mm, bevorzugter zumindest 20 mm, bevorzugter zumindest 50 mm, bevorzugter zumindest 100 mm, betragen.

Der erste Abschnitt der Trennsäule kann zumindest zwei, bevorzugt zumindest fünf, bevorzugter zumindest zehn, bevorzugter zumindest fünfzehn, bevorzugter zumindest zwanzig, vollständige Wicklungen aufweisen.

Der erste Abschnitt der Trennsäule umgibt die Strahlungsquelle. Insbesondere umgibt der erste Abschnitt der Trennsäule die Strahlungsquelle, wenn der erste Abschnitt wendelförmig oder helixförmig ausgebildet ist. Ebenso kann der erste Abschnitt der Trennsäule die Strahlungsquelle nicht umgeben, wenn der erste Abschnitt wendelförmig oder helixförmig ausgebildet ist. Wenn der erste Abschnitt der Trennsäule spiralförmig ausgebildet ist, kann der erste Abschnitt die Strahlungsquelle nicht umgeben.

Der erste Abschnitt weist eine Länge (Länge entlang der Trennsäule) von zumindest 500 mm, bevorzugter zumindest 1000 mm, auf.

Der erste Abschnitt der Trennsäule weist einen ersten Subabschnitt und einen zweiten Subabschnitt auf. Der erste Subabschnitt und der zweite Subabschnitt können elektromagnetische Strahlung ausgehend von der Strahlungsquelle empfangen. Mit anderen Worten, der erste Subabschnitt und der zweite Subabschnitt können von der Strahlungsquelle mit der elektromagnetischen Strahlung bestrahlt werden. Durch die elektromagnetische Strahlung können der erste Subabschnitt und der zweite Subabschnitt erwärmt werden. Insbesondere kann jeweils eine Oberfläche des ersten Subabschnitt und des zweiten Subabschnitts zumindest einen Anteil der elektromagnetischen Strahlung absorbieren. Dadurch können der erste Subabschnitt und der zweite Subabschnitt erwärmt werden.

Der erste Subabschnitt der Trennsäule und der zweite Subabschnitt der Trennsäule können die elektromagnetische Strahlung mit einer unterschiedlichen Intensität empfangen. Beispielsweise kann der erste Subabschnitt die elektromagnetische Strahlung mit einer höheren Intensität empfangen als der zweite Subabschnitt. Der Unterschied in der empfangenen Intensität der elektromagnetischen Strahlung kann zumindest 0,1 %, bevorzugt zumindest 0,5 %, bevorzugter zumindest 1 %, bevorzugter zumindest 5 %, bevorzugter zumindest 10 %, bevorzugter zumindest 20 %, bevorzugter zumindest 30 %, bevorzugter zumindest 40 %, bevorzugter zumindest 50 %, betragen. Insbesondere kann die elektromagnetische Strahlung in dem ersten Subabschnitt der Trennsäule mit einer zumindest 1 % höheren, bevorzugt zumindest 2 % höheren, bevorzugter zumindest 5 % höheren, bevorzugter zumindest 7 % höheren, bevorzugter zumindest 10 % höheren, bevorzugter zumindest 12 % höheren, bevorzugter zumindest 15 % höheren, bevorzugter zumindest 20 % höheren, bevorzugter zumindest 25 % höheren, bevorzugter zumindest 30 % höheren, Intensität empfangbar sein als in dem zweiten Subabschnitt. Dadurch kann der erste Subabschnitt stärker erwärmbar sein als der zweite Subabschnitt.

Der erste Subabschnitt und/oder der zweite Subabschnitt kann eine Länge von zumindest 1 mm, bevorzugt zumindest 2 mm, bevorzugter zumindest 5 mm, bevorzugter zumindest 10 mm, aufweisen. In dem ersten Subabschnitt und/oder in dem zweiten Subabschnitt kann ein (kontinuierlicher) Temperaturgradient gebildet werden, insbesondere durch einen (kontinuierlichen) Unterschied in der empfangbaren Intensität der elektromagnetischen Strahlung.

Bevorzugt ist zumindest abschnittsweise entlang (des ersten Abschnitts) der Trennsäule ein Temperaturgradient gebildet. Dabei kann die Temperatur stromaufwärts höher sein als stromabwärts. Mit anderen Worten, die Temperatur kann näher am Einlass höher sein als näher am Auslass der Trennsäule.

Allgemein kann die Intensität, mit der die elektromagnetische Strahlung in dem ersten Subabschnitt und in dem zweiten Subabschnitt empfangbar ist, als Leistung pro Fläche (beispielsweise W/m²) verstanden werden. Bei gleicher Fläche des ersten Subabschnitts und des zweiten Subabschnitts kann also in dem ersten Subabschnitt eine höhere Leistung der elektromagnetischen Strahlung empfangbar sein als in dem zweiten Subabschnitt.

Der erste Abschnitt der Trennsäule kann mehr als zwei Subabschnitte aufweisen, beispielsweise zumindest drei, zumindest fünf oder zumindest zehn Subabschnitte. In jedem der Subabschnitte kann die elektromagnetische Strahlung mit einer unterschiedlichen Intensität empfangbar sein.

Bevorzugt ist die elektromagnetische Strahlung in dem ersten Abschnitt der Trennsäule so empfangbar, dass sich ein (kontinuierlicher) Temperaturgradient entlang zumindest eines Abschnitts des ersten Abschnitts einstellt. Der (kontinuierliche) Temperaturgradient kann zwischen dem ersten Subabschnitt und dem zweiten Subabschnitt ausbildbar sein.

Zwischen dem Einlass der Trennsäule und dem Auslass der Trennsäule kann ein (kontinuierlicher) Temperaturgradient ausbildbar sein oder ausgebildet werden, insbesondere durch die Strahlungsquelle. Ein (kontinuierlicher) Temperaturgradient kann über die gesamte Länge der Trennsäule gebildet sein.

Allgemein kann bei einem Temperaturgradienten ein Temperaturunterschied von zumindest 1 °C, bevorzugt zumindest 5 °C, bevorzugter zumindest 10 °C, bevorzugter zumindest 20 °C, bevorzugter zumindest 40 °C, bevorzugter zumindest 70 °C, bevorzugter zumindest 100 °C, gebildet sein. Der Temperaturunterschied kann zwischen einer Position der Trennsäule, an der der Temperaturgradient beginnt, und einer Position der Trennsäule, an der der Temperaturgradient endet bestehen.

Zur Bestimmung des Temperaturunterschieds kann die Temperatur an einer ersten Position der Trennsäule mit einer Temperatur an einer zweiten Position der Trennsäule verglichen werden. Die erste Position der Trennsäule kann der Einlass der Trennsäule sein. Die zweite Position der Trennsäule kann der Auslass der Trennsäule sein. Zwischen der ersten Position der Trennsäule und der zweiten Position der Trennsäule kann ein Abstand (entlang der Trennsäule) von zumindest 10 mm, bevorzugt zumindest 50 mm, bevorzugter zumindest 100 mm, bevorzugter zumindest 200 mm, bevorzugter zumindest 300 mm, bevorzugter zumindest 500 mm, bevorzugter zumindest 1000 mm, liegen.

Zwischen dem ersten Subabschnitt und dem zweiten Subabschnitt kann ein Abstand entlang der Trennsäule von zumindest 10 mm, bevorzugt zumindest 50 mm, bevorzugter zumindest 100 mm, bevorzugter zumindest 200 mm, bevorzugter zumindest 300 mm, bevorzugter zumindest 500 mm, bevorzugter zumindest 1000 mm, liegen.

Der erste Abschnitt der Trennsäule kann von der Strahlungsquelle beabstandet sein. Insbesondere kontaktiert der erste Abschnitt der Trennsäule die Strahlungsquelle nicht.

Zwischen dem ersten Subabschnitt und der Strahlungsquelle kann ein Abstand gebildet sein. Alternativ oder zusätzlich kann zwischen dem zweiten Subabschnitt und der Strahlungsquelle ein Abstand gebildet sein. Ein Abstand zwischen dem ersten Subabschnitt und der Strahlungsquelle kann kleiner sein als ein Abstand zwischen dem zweiten Subabschnitt und der Strahlungsquelle. Der Abstand kann ein kürzester Abstand sein. Mit anderen Worten, der erste Subabschnitt kann (räumlich) näher an der Strahlungsquelle liegen als der zweite Subabschnitt.

Bevorzugt ist der Abstand zwischen dem ersten Subabschnitt und der Strahlungsquelle um zumindest 1 mm, bevorzugter um zumindest 2 mm, bevorzugter um zumindest 5 mm, bevorzugter um zumindest 10 mm, kleiner als der Abstand zwischen dem zweiten Subabschnitt und der Strahlungsquelle.

Der Abstand zwischen dem ersten Subabschnitt und der Strahlungsquelle kann zumindest 1,0 mm, bevorzugt zumindest 2,5 mm, bevorzugter zumindest 5 mm, bevorzugter zwischen 1 mm und 20 mm, bevorzugter zwischen 5 mm und 15 mm, bevorzugter etwa 10 mm, betragen. Alternativ oder zusätzlich kann der Abstand zwischen dem zweiten Subabschnitt und der Strahlungsquelle zumindest 5 mm, bevorzugt zumindest 10 mm, bevorzugter zwischen 10 mm und 30 mm, bevorzugter etwa 20 mm, betragen.

Die Trennsäule, insbesondere der erste Abschnitt der Trennsäule, kann sich zumindest abschnittsweise konisch erstrecken. Die Trennsäule, insbesondere der erste Abschnitt der Trennsäule, kann zumindest abschnittsweise konisch ausgebildet sein. Der Abstand zwischen der Trennsäule und der Strahlungsquelle, insbesondere zwischen dem ersten Abschnitt der Trennsäule und der Strahlungsquelle, kann (kontinuierlich) entlang der Trennsäule, insbesondere entlang des ersten Abschnitts der Trennsäule, zunehmen oder abnehmen.

Die Trennsäule, insbesondere der erste Abschnitt der Trennsäule, kann sich zumindest abschnittsweise zylinderförmig, geradlinig, hyperbolisch oder als Mischungen davon erstrecken.

In dem ersten Abschnitt kann ein Abstand zwischen der Trennsäule und der Strahlungsquelle zumindest abschnittsweise zunehmen oder abnehmen. Der Abstand zwischen der Trennsäule und der Strahlungsquelle kann über eine Länge der Trennsäule oder entlang der Trennsäule von zumindest 10 mm, bevorzugt zumindest 25 mm, bevorzugter zumindest 50 mm, bevorzugter zumindest 75 mm, bevorzugter zumindest 100 mm, bevorzugter zumindest 150 mm, bevorzugter zumindest 200 mm, bevorzugter über die Länge des gesamten ersten Abschnitts zunehmen oder abnehmen.

Die Trennsäule kann zumindest in dem ersten Abschnitt starr oder fest ausgebildet sein. Beispielsweise kann die Trennsäule in zumindest dem ersten Abschnitt verklebt sein. Dabei können benachbarte oder angrenzende Wicklungsabschnitte des ersten Abschnitts miteinander verklebt sein. Dadurch kann der erste Abschnitt der Trennsäule starr, fest oder unbeweglich sein.

Ebenso kann die Trennsäule zumindest in dem ersten Abschnitt beweglich oder in seiner Form veränderlich sein. Die Trennsäule bzw. benachbarte oder angrenzende Wicklungsabschnitte des ersten Abschnitts können nicht miteinander verbunden sein. Durch eine Veränderung der Form des ersten Abschnitts der Trennsäule können Abstände zwischen Abschnitten der Trennsäule und der Strahlungsquelle veränderlich sein. Dadurch kann das Temperaturprofil entlang der Trennsäule an eine Trennaufgabe anpassbar sein bzw. darauf abgestimmt werden.

Das System kann eine Halterung umfassen. Die Trennsäule kann zumindest abschnittsweise von der Halterung gehalten werden. Durch die Halterung kann eine Positionierung zumindest des ersten Abschnitts der Trennsäule relativ zu der Strahlungsquelle festgelegt werden oder festlegbar sein. Die Halterung kann eine Chiphalterung oder eine Klickhalterung sein. In eine Chiphalterung oder eine Klickhalterung kann die Trennsäule eingechipt oder eingeklickt werden.

Die Halterung kann verstellbar sein. Bei einem Verstellen der Halterung kann sich eine Form der Trennsäule zumindest in dem ersten Abschnitt verändern. Durch die Veränderung der Form der Trennsäule zumindest in dem ersten Abschnitt können Abstände zwischen Abschnitten des ersten Abschnitts der Trennsäule und der Strahlungsquelle verändert werden.

Durch die Veränderung der Form der Trennsäule, insbesondere durch eine Veränderung der Form der Trennsäule zumindest in dem ersten Abschnitt, kann sich die Intensität der in dem ersten Subabschnitt und/oder in dem zweiten Subabschnitt empfangbare elektromagnetische Strahlung verändern.

Die Trennsäule kann zumindest abschnittsweise, beispielsweise in dem ersten Abschnitt oder einem Teilabschnitt des ersten Abschnitts, mit einer Beschichtung versehen sein. Die Beschichtung kann die Intensität der empfangbaren elektromagnetischen Strahlung beeinflussen.

Die Beschichtung kann eine Beschichtung sein, durch die sich die Absorption und/oder Reflexion von elektromagnetischer Strahlung verändert. Beispielsweise kann die Beschichtung die Absorption elektromagnetischer Strahlung von der Strahlungsquelle erhöhen oder reduzieren. Ebenso kann die Beschichtung die Reflexion elektromagnetischer Strahlung von der Strahlungsquelle erhöhen oder reduzieren.

Die Beschichtung kann eine metallische Beschichtung, beispielsweise eine Gold- oder Silber-Beschichtung, sein. Die Beschichtung kann eine Graphit-Beschichtung sein. Die Beschichtung kann auf zumindest einen Abschnitt der Trennsäule aufgedampft oder aufgesprüht werden. Ebenso kann die Beschichtung auf zumindest einen Abschnitt der Trennsäule (flüssig) aufgetragen werden.

Die Beschichtung kann in dem ersten Subabschnitt der Trennsäule aufgebracht sein und in dem zweiten Subabschnitt der Trennsäule kann die Beschichtung nicht aufgebracht sein. Ebenso kann die Beschichtung in dem zweiten Subabschnitt der Trennsäule aufgebracht sein und in dem ersten Subabschnitt der Trennsäule kann die Beschichtung nicht aufgebracht sein.

Insbesondere kann die Beschichtung auf (einen Abschnitt) der Trennsäule aufgebracht sein, wenn der Abstand zwischen der Trennsäule und der Strahlungsquelle in dem ersten Abschnitt konstant ist. Die Beschichtung kann auf den ersten Subabschnitt oder den zweiten Subabschnitt aufgebracht sein, wenn der Abstand zwischen dem ersten Subabschnitt und der Strahlungsquelle im Wesentlichen (±10 % oder ±5 %) gleich zu dem Abstand zwischen dem zweiten Subabschnitt und der Strahlungsquelle ist.

Die Beschichtung (der Trennsäule) kann die Absorption und/oder Reflexion der elektromagnetischen Strahlung beeinflussen.

Die Strahlungsquelle kann einen ersten Abschnitt aufweisen und die Strahlungsquelle kann einen zweiten Abschnitt aufweisen. Der erste Abschnitt kann eingerichtet sein, elektromagnetische Strahlung in Richtung des ersten Subabschnitts mit einer höheren Intensität auszusenden oder auszustrahlen als der zweite Abschnitt eingerichtet ist, elektromagnetische Strahlung in Richtung des zweiten Subabschnitts auszusenden oder auszustrahlen. Mit anderen Worten, die Strahlungsquelle kann eingerichtet sein, elektromagnetische Strahlung in Richtung des ersten Abschnitts der Trennsäule mit unterschiedlicher Intensität auszusenden oder auszustrahlen. In Richtung des ersten Subabschnitts kann die Strahlungsquelle elektromagnetische Strahlung mit höherer Intensität abstrahlen oder ausstrahlen als in Richtung des zweiten Subabschnitts. Dadurch kann sich der erste Subabschnitt der Trennsäule stärker erwärmen als der zweite Subabschnitt.

Die Strahlungsquelle kann zumindest in dem ersten Abschnitt mit einer Beschichtung versehen sein. Alternativ oder zusätzlich kann die Strahlungsquelle zumindest in dem zweiten Abschnitt mit einer Beschichtung versehen sein.

Die Beschichtung kann eine Beschichtung sein, durch die sich die Absorption und/oder Reflexion von elektromagnetischer Strahlung verändert. Beispielsweise kann die Beschichtung die Absorption elektromagnetischer Strahlung erhöhen oder reduzieren. Ebenso kann die Beschichtung die Reflexion elektromagnetischer Strahlung von der Strahlungsquelle erhöhen oder reduzieren.

Die Beschichtung kann eine metallische Beschichtung, beispielsweise eine Gold- oder Silber-Beschichtung, sein. Die Beschichtung kann eine Graphit-Beschichtung sein. Die Beschichtung kann auf zumindest einen Abschnitt der Trennsäule aufgedampft oder aufgesprüht werden. Ebenso kann die Beschichtung auf zumindest einen Abschnitt der Trennsäule (flüssig) aufgetragen werden.

Die Beschichtung kann in dem ersten Abschnitt der Strahlungsquelle aufgebracht sein und in dem zweiten Abschnitt der Strahlungsquelle kann die Beschichtung nicht aufgebracht sein. Ebenso kann die Beschichtung in dem zweiten Abschnitt der Strahlungsquelle aufgebracht sein und in dem ersten Abschnitt der Strahlungsquelle kann die Beschichtung nicht aufgebracht sein.

Insbesondere kann die Beschichtung auf (einen Abschnitt) der Strahlungsquelle aufgebracht sein, wenn der Abstand zwischen der Trennsäule und der Strahlungsquelle in dem ersten Abschnitt konstant ist. Die Beschichtung kann auf den ersten Subabschnitt oder den zweiten Subabschnitt aufgebracht sein, wenn der Abstand zwischen dem ersten Subabschnitt und der Strahlungsquelle im Wesentlichen (±10 % oder ±5 %) gleich zu dem Abstand zwischen dem zweiten Subabschnitt und der Strahlungsquelle ist.

Die Strahlungsquelle kann ein lichtdurchlässiges Element umfassen. Durch das lichtdurchlässige Element kann die von der Strahlungsquelle erzeugte elektromagnetische Strahlung hindurchtreten. Das lichtdurchlässige Element kann Glas oder einen Kunststoff umfassen oder aus Glas oder Kunststoff bestehen.

Das lichtdurchlässige Element kann einen ersten Abschnitt und einen zweiten Abschnitt aufweisen. Die transmissiven Eigenschaften für die elektromagnetische Strahlung können sich in dem ersten Abschnitt des lichtdurchlässigen Elements und dem zweiten Abschnitt des lichtdurchlässigen Elements unterscheiden. Beispielsweise kann sich die Zusammensetzung des Materials des lichtdurchlässigen Elements in dem ersten Abschnitt von der Zusammensetzung des Materials des lichtdurchlässigen Elements in dem zweiten Abschnitt unterscheiden. In dem ersten Abschnitt kann elektromagnetische Strahlung mit einer höheren Intensität durch das lichtdurchlässige Element hindurchtreten als in dem zweiten Abschnitt.

Der erste Abschnitt des lichtdurchlässigen Elements kann elektromagnetische Strahlung in Richtung des ersten Subabschnitts der Trennsäule ausstrahlen oder aussenden. Der zweite Abschnitt des lichtdurchlässigen Elements kann elektromagnetische Strahlung in Richtung des zweiten Subabschnitts der Trennsäule ausstrahlen oder aussenden. Dadurch kann der erste Subabschnitt der Trennsäule stärker erwärmt werden als der erste Subabschnitt der Trennsäule.

Insbesondere kann das lichtdurchlässige Element Glas umfassen oder daraus bestehen. Der erste Abschnitt des lichtdurchlässigen Elements kann unterschiedlich zu dem zweiten Abschnitt des lichtdurchlässigen Elements dotiert sein. Durch die unterschiedliche Dotierung kann der erste Abschnitt des lichtdurchlässigen Elements elektromagnetische Strahlung mit einer höheren Intensität in Richtung des ersten Subabschnitts der Trennsäule aussenden oder ausstrahlen als der zweite Abschnitt des lichtdurchlässigen Elements elektromagnetische Strahlung in Richtung des zweiten Subabschnitts der Trennsäule aussendet oder ausstrahlt.

Zwischen der Strahlungsquelle und der Trennsäule kann ein Abschirmelement angeordnet sein. Das Abschirmelement kann eingerichtet sein, einen Teil der elektromagnetischen Strahlung der Strahlungsquelle abzuschirmen.

Beispielsweise kann ein erster Abschnitt der Strahlungsquelle elektromagnetische Strahlung mit im Wesentlichen (±10 % oder ±5 %) der gleichen Intensität in Richtung des ersten Subabschnitts der Trennsäule aussenden oder ausstrahlen, wie ein zweiter Abschnitt der Strahlungsquelle elektromagnetische Strahlung in Richtung des zweiten Subabschnitts aussendet oder ausstrahlt. Das Abschirmelement kann zumindest zwischen dem zweiten Abschnitt der Strahlungsquelle und dem zweiten Subabschnitt der Trennsäule angeordnet sein. Dadurch kann der zweite Subabschnitt der Trennsäule elektromagnetische Strahlung mit einer geringeren Intensität empfangen als der erste Subabschnitt der Trennsäule. Zwischen dem ersten Abschnitt der Strahlungsquelle und dem ersten Subabschnitt der Trennsäule kann kein Abschirmelement angeordnet sein oder ein zwischen dem ersten Abschnitt der Strahlungsquelle und dem ersten Subabschnitt der Trennsäule angeordnetes Abschirmelement kann die elektromagnetische Strahlung weniger stark abschirmen als das Abschirmelement zwischen dem zweiten Abschnitt der Strahlungsquelle und dem zweiten Subabschnitt der Trennsäule.

Das Abschirmelement kann einen ersten Abschnitt und einen zweiten Abschnitt aufweisen. Der erste Abschnitt kann eingerichtet sein, elektromagnetische Strahlung der Strahlungsquelle weniger stark abzuschirmen als der der zweite Abschnitt. Durch den ersten Abschnitt des Abschirmelements kann elektromagnetische Strahlung von der Strahlungsquelle in Richtung des ersten Subabschnitts der Trennsäule strahlen. Durch den zweiten Abschnitt des Abschirmelements kann elektromagnetische Strahlung von der Strahlungsquelle in Richtung des zweiten Subabschnitts der Trennsäule strahlen. Dadurch kann der erste Subabschnitt der Trennsäule elektromagnetische Strahlung mit einer höheren Intensität empfangen als der zweite Subabschnitt der Trennsäule, wodurch der erste Subabschnitt der Trennsäule stärker erwärmt werden kann als der zweite Subabschnitt der Trennsäule.

Das Abschirmelement kann ein Verschattungselement, ein Filter, ein semitransparentes Element und/oder ein Element mit einer Beschichtung sein. Die transmissiven Eigenschaften für die elektromagnetische Strahlung der Strahlungsquelle können sich in einem ersten Abschnitt des Abschirmelements und in einem zweiten Abschnitt des Abschirmelements unterscheiden.

Allgemein kann die elektromagnetische Strahlung der Strahlungsquelle Infrarotstrahlung umfassen oder ein Intensitätsmaximum im infraroten Wellenlängenbereich aufweisen.

Der erste Abschnitt der Trennsäule kann die Strahlungsquelle umgeben. Insbesondere umgibt der erste Abschnitt der Trennsäule die Strahlungsquelle vollständig.

Das System kann einen Detektor umfassen. Der Detektor kann eingerichtet sein, eine Eigenschaft von Stoffen in dem Stoffgemisch zu analysieren. Insbesondere kann der Detektor am Auslass der Trennsäule angeordnet sein. Der Detektor kann eingerichtet sein, zumindest eine Eigenschaft eines Stoffes zu analysieren, wobei der Stoff durch die Trennsäule aus dem Stoffgemisch aufgetrennt wurde.

Der Detektor kann ein Flammenionisationsdetektor (FID), ein Wärmeleitfähigkeitsdetektor (WLD), ein Photoionisationsdetektor (PID), ein flammenphotometrischer Detektor (FPD), ein Stickstoff-Phosphor-Detektor (NPD), ein thermionischer Detektor (TID), ein Elektroneneinfangdetektor (ECD), ein pulsed charge detector (PD), ein Atomemissionsdetektor (AED), ein Echelle-Plasma-Emisions-Detektor (EPED), Massenspektrometer (MS) und/oder ein Ionen-Mobilitäts-Spektrometer (IMS) sein. Besonders bevorzugt ist der Detektor ein Ionen-Mobilitäts-Spektrometer oder ein Massenspektrometer.

Offenbart ist ein Verfahren zur Trennung oder Auftrennung von Stoffen in einem Stoffgemisch. Das Verfahren umfasst das Einbringen des Stoffgemisches in einen Einlass einer Trennsäule; das Einstrahlen von elektromagnetischer Strahlung ausgehend von einer Strahlungsquelle auf zumindest einen ersten Abschnitt der Trennsäule, um den ersten Abschnitt zu erwärmen, wobei die Trennsäule die elektromagnetische Strahlung in einem ersten Subabschnitt des ersten Abschnitts mit einer höheren Intensität empfängt als in einem zweiten Subabschnitt des ersten Abschnitts, sodass der erste Subabschnitt stärker erwärmt wird als der zweite Subabschnitt; und das Ausbringen des aufgetrennten Stoffgemisches aus einem Auslass der Trennsäule.

Jedes hierin offenbarte Merkmal kann in dem Verfahren eingesetzt werden. Insbesondere kann jede hierin offenbarte Trennsäule und/oder Strahlungsquelle in dem Verfahren eingesetzt werden.

Offenbart ist ein Verfahren zur Analyse von Stoffen in einem Stoffgemisch. Das Verfahren umfasst das Durchführen eines hierin offenbarten Verfahrens zur Trennung oder Auftrennung von Stoffen in einem Stoffgemisch; und das Detektieren, durch einen Detektor, von Stoffen in dem aufgetrennten Stoffgemisch.

Jedes hierin offenbarte Merkmal kann in dem Verfahren eingesetzt werden. Insbesondere kann jede hierin offenbarte Trennsäule und/oder Strahlungsquelle und/oder Detektor in dem Verfahren eingesetzt werden.

Offenbart, wenn auch nicht in den Ansprüchen beansprucht, ist eine Trennsäule zur Trennung von Stoffen in einem Stoffgemisch. Die Trennsäule kann zumindest einen ersten Abschnitt aufweisen, der um eine zentrale Achse gewickelt ist. Der erste Abschnitt kann einen ersten Subabschnitt und einen zweiten Subabschnitt aufweisen. Der erste Subabschnitt kann eingerichtet sein, elektromagnetische Strahlung mit einer höheren Intensität zu empfangen als der zweite Subabschnitt, sodass der erste Subabschnitt stärker durch die elektromagnetische Strahlung erwärmbar ist als der zweite Subabschnitt.

Jedes hierin offenbarte Merkmal kann in der Trennsäule eingesetzt werden. Insbesondere kann die Trennsäule jede hierin offenbarte Trennsäule sein, insbesondere kann die zentrale Achse die Strahlungsquelle in hierin offenbarten Merkmalen ersetzen.

Wenn die Trennsäule spiralförmig gewickelt ist, kann die zentrale Achse senkrecht zu der von der Trennsäule definierten Ebene, in der die Trennsäule flächig liegt, orientiert sein. Wenn die Trennsäule wendelförmig oder helixförmig gewickelt ist, kann die zentrale Achse als Achse verstanden werden, die mittig von der Trennsäule umwickelt ist.

Die elektromagnetische Strahlung kann ausgehend von der zentralen Achse in dem ersten Subabschnitt und dem zweiten Subabschnitt empfangbar sein. Insbesondere kann eine Strahlungsquelle an der zentralen Achse oder im Bereich der zentralen Achse angeordnet sein. Jede hierin offenbarte Strahlungsquelle kann hierfür eingesetzt werden.

Ein Abstand zwischen dem ersten Subabschnitt und der zentralen Achse kann kleiner sein als ein Abstand zwischen dem zweiten Subabschnitt und der zentralen Achse.

Zwischen dem ersten Subabschnitt und der zentralen Achse kann ein Abstand gebildet sein. Alternativ oder zusätzlich kann zwischen dem zweiten Subabschnitt und der zentralen Achse ein Abstand gebildet sein. Ein Abstand zwischen dem ersten Subabschnitt und der zentralen Achse kann kleiner sein als ein Abstand zwischen dem zweiten Subabschnitt und der zentralen Achse.

Bevorzugt ist der Abstand zwischen dem ersten Subabschnitt und der zentralen Achse um zumindest 1 mm, bevorzugter um zumindest 2 mm, bevorzugter um zumindest 5 mm, bevorzugter um zumindest 10 mm, kleiner als der Abstand zwischen dem zweiten Subabschnitt und der zentralen Achse.

Der Abstand zwischen dem ersten Subabschnitt und der zentralen Achse kann zumindest 5 mm, bevorzugt zwischen 5 mm und 20 mm, bevorzugter zwischen 5 mm und 15 mm, bevorzugter etwa 10 mm, betragen. Alternativ oder zusätzlich kann der Abstand zwischen dem zweiten Subabschnitt und der zentralen Achse zumindest 5 mm, bevorzugt zumindest 10 mm, bevorzugter zwischen 10 mm und 30 mm, bevorzugter etwa 20 mm, betragen.

Die Trennsäule, insbesondere der erste Abschnitt der Trennsäule, kann sich zumindest abschnittsweise konisch erstrecken. Die Trennsäule, insbesondere der erste Abschnitt der Trennsäule, kann zumindest abschnittsweise konisch ausgebildet sein. Der Abstand zwischen der Trennsäule und der zentralen Achse, insbesondere zwischen dem ersten Abschnitt der Trennsäule und der zentralen Achse, kann (kontinuierlich) entlang der Trennsäule, insbesondere entlang des ersten Abschnitts der Trennsäule, zunehmen oder abnehmen.

Die Trennsäule, insbesondere der erste Abschnitt der Trennsäule, kann sich zumindest abschnittsweise zylinderförmig, geradlinig, hyperbolisch oder als Mischungen davon erstrecken.

In dem ersten Abschnitt kann ein Abstand zwischen der Trennsäule und der zentralen Achse zumindest abschnittsweise zunehmen oder abnehmen. Der Abstand zwischen der Trennsäule und der zentralen Achse kann über eine Länge der Trennsäule oder entlang der Trennsäule von zumindest 1,0 mm, bevorzugt zumindest 5 mm, bevorzugter zumindest 10 mm, bevorzugter zumindest 25 mm, bevorzugter zumindest 50 mm, bevorzugter zumindest 75 mm, bevorzugter zumindest 100 mm, bevorzugter zumindest 150 mm, bevorzugter zumindest 200 mm, bevorzugter über die Länge des gesamten ersten Abschnitts zunehmen oder abnehmen.

Die Trennsäule kann zumindest in dem ersten Abschnitt starr oder fest ausgebildet sein. Ebenso kann die Trennsäule zumindest in dem ersten Abschnitt beweglich oder in seiner Form veränderlich sein.

Die Trennsäule kann zumindest abschnittsweise von einer Halterung gehalten werden. Durch die Halterung kann eine Positionierung zumindest des ersten Abschnitts der Trennsäule relativ zu der zentralen Achse festgelegt werden oder festlegbar sein.

Die Halterung kann verstellbar sein. Bei einem Verstellen der Halterung kann sich eine Form der Trennsäule zumindest in dem ersten Abschnitt verändern. Durch die Veränderung der Form der Trennsäule zumindest in dem ersten Abschnitt können Abstände zwischen Abschnitten des ersten Abschnitts der Trennsäule und der zentralen Achse verändert werden.

Durch die Veränderung der Form der Trennsäule, insbesondere durch eine Veränderung der Form der Trennsäule zumindest in dem ersten Abschnitt, kann sich die Intensität der in dem ersten Subabschnitt und/oder in dem zweiten Subabschnitt empfangbare elektromagnetische Strahlung verändern.

Die Trennsäule kann zumindest abschnittsweise, beispielsweise in dem ersten Abschnitt oder einem Teilabschnitt des ersten Abschnitts, mit einer Beschichtung versehen sein. Die Beschichtung kann die Intensität der empfangbaren elektromagnetischen Strahlung beeinflussen.

Die Beschichtung kann eine Beschichtung sein, durch die sich die Absorption und/oder Reflexion von elektromagnetischer Strahlung verändert. Beispielsweise kann die Beschichtung die Absorption elektromagnetischer Strahlung von einer Strahlungsquelle erhöhen oder reduzieren. Ebenso kann die Beschichtung die Reflexion elektromagnetischer Strahlung von einer Strahlungsquelle erhöhen oder reduzieren.

Die Beschichtung kann eine metallische Beschichtung, beispielsweise eine Gold- oder Silber-Beschichtung, sein. Die Beschichtung kann eine Graphit-Beschichtung sein. Die Be-schichtung kann auf zumindest einen Abschnitt der Trennsäule aufgedampft oder aufgesprüht werden. Ebenso kann die Beschichtung auf zumindest einen Abschnitt der Trennsäule (flüssig) aufgetragen werden.

Die Beschichtung kann in dem ersten Subabschnitt der Trennsäule aufgebracht sein und in dem zweiten Subabschnitt der Trennsäule kann die Beschichtung nicht aufgebracht sein. Ebenso kann die Beschichtung in dem zweiten Subabschnitt der Trennsäule aufgebracht sein und in dem ersten Subabschnitt der Trennsäule kann die Beschichtung nicht aufgebracht sein.

Insbesondere kann die Beschichtung auf (einen Abschnitt) der Trennsäule aufgebracht sein, wenn der Abstand zwischen der Trennsäule und der zentralen Achse in dem ersten Ab-schnitt konstant ist. Die Beschichtung kann auf den ersten Subabschnitt oder den zweiten Subabschnitt aufgebracht sein, wenn der Abstand zwischen dem ersten Subabschnitt und der zentralen Achse im Wesentlichen (±10 % oder ±5 %) gleich zu dem Abstand zwischen dem zweiten Subabschnitt und der zentralen Achse ist.

### Kurze Beschreibung der Figuren

Nachfolgend wird anhand von Figuren die Offenbarung bzw. weitere Ausführungsformen und Vorteile der Offenbarung näher erläutert, wobei die Figuren lediglich Ausführungsbeispiele der Offenbarung beschreiben. Gleiche Bestandteile in den Figuren werden mit gleichen Bezugszeichen versehen. In den Figuren zeigt:
- Fig. 1: ein System 1000 zur Analyse mit einem System 100 zur Trennung von Stoffen in einem Stoffgemisch;
- Fig. 2: ein System 100 zur Trennung von Stoffen in einem Stoffgemisch;
- Fig. 3: ein System 100 zur Trennung von Stoffen in einem Stoffgemisch;
- Fig. 4: ein System 100 zur Trennung von Stoffen in einem Stoffgemisch;
- Fig. 5: ein System 100 zur Trennung von Stoffen in einem Stoffgemisch;
- Fig. 6: ein System 100 zur Trennung von Stoffen in einem Stoffgemisch;
- Fig. 7: ein System 100 zur Trennung von Stoffen in einem Stoffgemisch;
- Fig. 8: ein System 100 zur Trennung von Stoffen in einem Stoffgemisch;
- Fig. 9: ein System 100 zur Trennung von Stoffen in einem Stoffgemisch;
- Fig. 10: ein System 100 zur Trennung von Stoffen in einem Stoffgemisch; und
- Fig. 11: ein System 100 zur Trennung von Stoffen in einem Stoffgemisch.

### Detaillierte Beschreibung

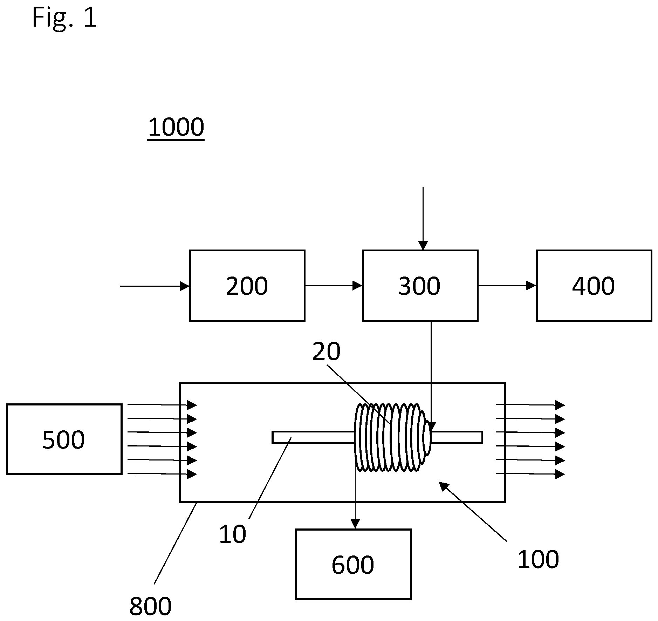

Fig. 1 zeigt ein System 1000 zur Analyse eines Stoffes (nachfolgend auch kurz als System 1000 bezeichnet). Durch das System 1000 kann zumindest ein Stoff eines Stoffgemisches analysiert werden. Allgemein kann analysieren bedeuten, dass zumindest eine physikalische oder chemische Eigenschaft eines Stoffes bestimmt wird.

Das System 1000 kann ein Gasversorgungselement 200, einen Injektor 300, ein Ventil 400, ein System 100 zur Auftrennung von Stoffen in einem Stoffgemisch (nachfolgend auch kurz als System 100 bezeichnet), einen Detektor 600 und einen Lüfter 500 umfassen. Das System 1000 muss keine der Komponenten, wie in Fig. 1 gezeigt und mit Blick darauf beschrieben, notwendigerweise umfassen. Vielmehr kann das System 1000 eine Komponente oder einige der Komponenten umfassen und andere der Komponenten nicht umfassen.

Das Gasversorgungselement 200 kann eine Gasversorgung des Systems 1000 bereitstellen. Insbesondere kann durch das Gasversorgungselement 200 eine Gasversorgung des Systems 1000 gesteuert oder geregelt werden. Beispielsweise kann das Gasversorgungselement 200 ein Trägergas bereitstellen.

In den Injektor 300 kann ein Stoffgemisch mit verschiedenen Stoffen in das System 1000 eingebracht werden. Das Stoffgemisch stellt die zu untersuchende Probe dar. Speziell kann der Injektor 300 mit dem Gasversorgungselement 200 verbunden sein und von diesem mit Trägergas versorgt werden. Zumindest ein Teil des in den Injektor 300 eingebrachten Stoffgemisches kann mit dem Trägergas in das System 100 eingebracht werden.

Das Ventil 400 kann Gasströme in dem System 1000 steuern oder regeln. Insbesondere kann das Ventil 400 zusätzlich oder alternativ zu dem Gasversorgungselement 200 den Trägergasstrom steuern oder regeln.

In dem System 100 kann das Stoffgemisch und das Trägergas auf die Trennsäule 20 aufgebracht werden. Die Trennsäule 20 kann von einer Strahlungsquelle 10 erwärmt werden. Das Stoffgemisch und das Trägergas können die Trennsäule 20 durchlaufen. Beim Durchlaufen der Trennsäule 20 können Stoffe in dem Stoffgemisch aufgetrennt werden, sodass verschiedene Stoffe des Stoffgemisches zu unterschiedlichen Zeitpunkten aus der Trennsäule 20 ausströmen.

Die aus der Trennsäule 20 ausströmenden Stoffe des Stoffgemisches können in den Detektor 600 eingebracht werden. In dem Detektor 600 kann zumindest eine Eigenschaft von zumindest einem der Stoffe des Stoffgemisches analysiert werden.

Während das Stoffgemisch durch die Trennsäule 20 strömt, kann die Temperatur der Trennsäule 20 verändert werden. Beispielsweise kann eine Starttemperatur oder ein Starttemperaturprofil für die Trennsäule 20 vorgegeben sein. Sobald das Stoffgemisch auf die Trennsäule 20 aufgegeben wird, kann die Temperatur in der Trennsäule 20 in Richtung einer Endtemperatur oder eines Endtemperaturprofils erhöht werden. Dies kann durch eine vorgegebene Temperaturrampe erfolgen. Die Erhöhung der Temperatur kann durch eine Erhöhung der Leistung der Strahlungsquelle 10 erfolgen.

Wenn die Endtemperatur oder das Endtemperaturprofil am Ende einer Messung, d.h. wenn das aufgetrennte Stoffgemisch aus der Trennsäule in Richtung des Detektors 600 ausgeströmt ist, erreicht ist, kann die Temperatur der Trennsäule für eine nachfolgende Messung wieder auf die Starttemperatur oder auf das Starttemperaturprofil reduziert werden. Dazu kann das System 1000 den Lüfter 500 umfassen.

Der Lüfter 500 kann einen Luftstrom erzeugen, der das System 100, insbesondere die Trennsäule 20, umströmt. Durch den Luftstrom kann die Trennsäule 20 gekühlt werden.

Zusätzlich oder alternativ zu dem Lüfter 500, kann das System 1000 eine aktive Kühlung (nicht dargestellt) umfassen. Die aktive Kühlung kann durch ein Kühlgas, z.B. Kohlenstoffdioxid oder Stickstoff, oder durch ein Kühlelement, z.B. ein Peltier-Element, eine Kühlung der Trennsäule 20 bewirken. Dadurch kann die Abkühlzeit des Systems reduziert werden und/oder eine Analyse sehr leichtflüchtiger bzw. gasförmiger Verbindungen (z.B. Methan) erfolgen.

Ebenso kann ein Unterdruck (Vakuum) an den Auslass der Trennsäule 20 angelegt werden. Dazu kann das System 1000 eine Unterdruckeinheit (nicht dargestellt) umfassen. Ein solches Verfahren ist als Low Pressure Gas Chromatography (LPGC) als solches bekannt. Dadurch kann die Effizienz der Trennung von Stoffen in dem Stoffgemisch gesteigert werden und/oder die Analysezeit verkürzt werden.

Das System 1000 kann ein Gehäuse 800 umfassen. In dem Gehäuse 800 kann zumindest teilweise das System 100 angeordnet sein. Das Gehäuse 800 kann eine thermisch isolierende Schicht umfassen. Alternativ oder zusätzlich kann das Gehäuse 800 einen Reflektor umfassen. Der Reflektor kann zumindest einen Teil der von der Strahlungsquelle 10 erzeugten elektromagnetischen Strahlung reflektieren.

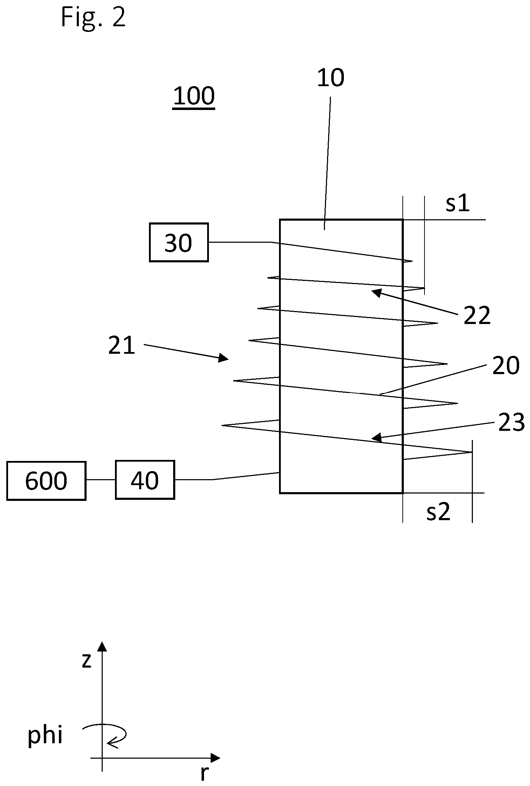

Fig. 2 zeigt eine schematische Darstellung des Systems 100. Das System 100 umfasst eine Strahlungsquelle 10 und eine Trennsäule 20. Zusätzlich kann das System 100 einen Detektor 600 umfassen. Über einen Einlass 30, z.B. über den Injektor 300 wie in Fig. 1 dargestellt, kann das zu trennende Stoffgemisch auf die Trennsäule 20 aufgebracht werden. Das Stoffgemisch kann die Trennsäule 20 durchströmen, um Stoffe des Stoffgemisches aufzutrennen. Die aufgetrennten Stoffe des Stoffgemisches können über einen Auslass 40 ausströmen, beispielsweise zu dem Detektor 600.

Die Trennsäule 20 weist einen ersten Abschnitt 21 auf. Der erste Abschnitt 21 der Trennsäule 20 ist in diesem Beispiel um die Strahlungsquelle 10 gewickelt. Die Trennsäule 20 kann zumindest in dem ersten Abschnitt 21 wendelförmig oder helixförmig ausgestaltet sein.

Der erste Abschnitt 21 der Trennsäule weist einen ersten Subabschnitt 22 und einen zweiten Subabschnitt 23 auf. Ein Abstand s1 zwischen dem ersten Subabschnitt 22 und der Strahlungsquelle 10 ist kleiner als ein Abstand s2 zwischen dem zweiten Subabschnitt 23 und der Strahlungsquelle 10.

Die Strahlungsquelle 10 kann in diesem Beispiel stabförmig ausgebildet sein. Die Strahlungsquelle 10 kann elektromagnetische Strahlung mit einer gleichen Intensität über den strahlungssendenden Abschnitt der Strahlungsquelle 10 aussenden.

Durch die unterschiedlichen Abstände s1, s2 zwischen dem ersten Subabschnitt 22 und der Strahlungsquelle 10 sowie dem zweiten Subabschnitt 23 und der Strahlungsquelle werden der erste Subabschnitt 22 und der zweite Subabschnitt 23 unterschiedlich stark erwärmt.

Zwischen dem ersten Subabschnitt 22 und dem zweiten Subabschnitt 23 kann sich entlang der Trennsäule 20, insbesondere entlang des ersten Abschnitts 21, der Abstand zwischen der Trennsäule 20 und der Strahlungsquelle 10 kontinuierlich verändern, beispielsweise zunehmen oder abnehmen. Bevorzugt nimmt der Abstand zwischen der Trennsäule 20 und der Strahlungsquelle 10 vom Einlass 30 zum Auslass 40 zu. Durch die unterschiedlichen Abstände der Abschnitte der Trennsäule 20 zu der Strahlungsquelle 10, kann sich ein Temperaturgradient entlang der Trennsäule 20, insbesondere entlang des ersten Abschnitts 21 der Trennsäule 20, ergeben. Die Temperatur kann vom Einlass 30 zum Auslass 40 abnehmen. Dadurch wird eine Refokussierung der aufgetrennten Stoffe des Stoffgemisches am Auslass 40 erzeugt.

In einem Zylinderkoordinatensystem kann der Abstand zwischen der Trennsäule 20 und der Strahlungsquelle in radialer Richtung (r-Richtung) vorliegen. Die Strahlungsquelle 10 kann sich in axialer Richtung (z-Richtung) erstrecken. In axialer z-Richtung kann sich die Höhenrichtung der wendelförmig oder helixförmig gewickelten Trennsäule 20 erstrecken. Die Wicklung der Trennsäule 20 kann in Umfangsrichtung (phi-Richtung) vorliegen.

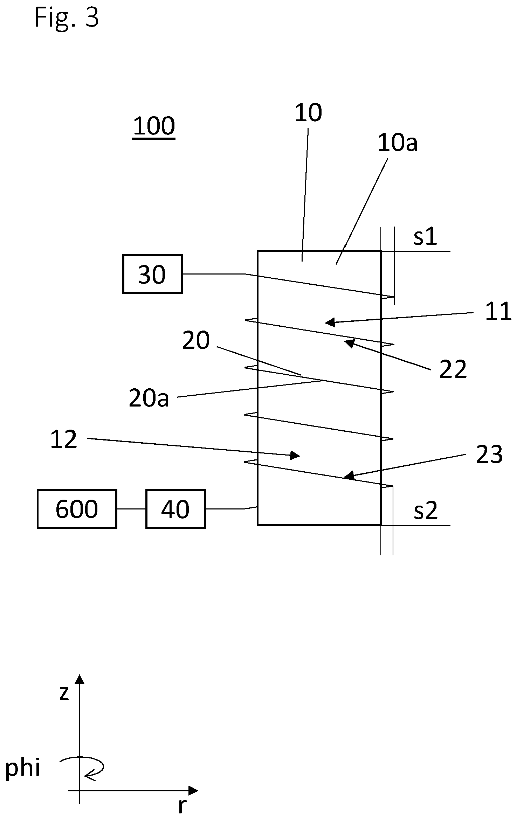

Fig. 3 zeigt eine Ausgestaltung eines Systems 100 in einer schematischen Darstellung. Das System 100 umfasst eine Strahlungsquelle 10 und eine Trennsäule 20. Zusätzlich kann das System 100 einen Detektor 600 umfassen. Über einen Einlass 30, z.B. über den Injektor 300 wie in Fig. 1 dargestellt, kann das zu trennende Stoffgemisch auf die Trennsäule 20 aufgebracht werden. Das Stoffgemisch kann die Trennsäule 20 durchströmen, um Stoffe des Stoffgemisches aufzutrennen. Die aufgetrennten Stoffe des Stoffgemisches können über einen Auslass 40 ausströmen, beispielsweise zu dem Detektor 600.

Die Trennsäule 20 weist einen ersten Abschnitt 21 auf. Der erste Abschnitt 21 der Trennsäule 20 ist in diesem Beispiel um die Strahlungsquelle 10 gewickelt. Die Trennsäule 20 kann zumindest in dem ersten Abschnitt 21 wendelförmig oder helixförmig ausgestaltet sein. In diesem Beispiel kann die Wicklung in dem ersten Abschnitt 21 zylinderförmig ausgestaltet sein.

Der erste Abschnitt 21 der Trennsäule weist einen ersten Subabschnitt 22 und einen zweiten Subabschnitt 23 auf. Ein Abstand s1 zwischen dem ersten Subabschnitt 22 und der Strahlungsquelle 10 ist gleich zu einem Abstand s2 zwischen dem zweiten Subabschnitt 23 und der Strahlungsquelle 10.

Die Strahlungsquelle 10 kann in diesem Beispiel stabförmig ausgebildet sein. Die Strahlungsquelle 10 kann elektromagnetische Strahlung mit einer gleichen Intensität über den strahlungssendenden Abschnitt der Strahlungsquelle 10 aussenden.

Die Strahlungsquelle 10 kann eine Beschichtung 10a aufweisen. Beispielsweise weist die Strahlungsquelle 10 einen ersten Abschnitt 11 und einen zweiten Abschnitt 12 auf. Zumindest der zweite Abschnitt 12 kann mit der Beschichtung 10a versehen sein. Durch die Beschichtung kann die Intensität der von dem zweiten Abschnitt 12 ausgestrahlten oder ausgesendeten elektromagnetischen Strahlung geringer sein als in dem ersten Abschnitt 11. In dem ersten Abschnitt 11 kann keine Beschichtung 10a vorgesehen sein oder eine Beschichtung 10a vorgesehen sein, die eine geringere Reduktion der Intensität der elektromagnetischen Strahlung verursacht.

Elektromagnetische Strahlung, ausgehend von dem ersten Abschnitt 11 der Strahlungsquelle 10, kann von dem ersten Subabschnitt 22 der Trennsäule 20 mit einer höheren Intensität empfangen werden als elektromagnetische Strahlung ausgehend von dem zweiten Abschnitt 12 der Strahlungsquelle von dem zweiten Subabschnitt 23 der Trennsäule empfangen werden kann. Dadurch kann der erste Subabschnitt 22 der Trennsäule 20 stärker erwärmt werden als der zweite Subabschnitt 23 der Trennsäule, obwohl der jeweilige Abstand zur Strahlungsquelle 10 gleich ist.

Alternativ oder zusätzlich zu der Beschichtung 10a der Strahlungsquelle 10 kann die Trennsäule 20 mit einer Beschichtung 20a versehen sein. Beispielsweise kann der erste Subabschnitt 22 mit der Beschichtung 20a versehen sein. Durch die Beschichtung 20a kann die Absorption der von der Strahlungsquelle 10 ausgesendeten oder ausgestrahlten elektromagnetischen Strahlung erhöht werden. Der zweite Subabschnitt 23 kann keine Beschichtung 20a aufweisen oder eine Beschichtung 20a aufweisen, die eine geringe Erhöhung der Absorption der elektromagnetischen Strahlung verursacht.

Ebenso kann die Beschichtung 20a in dem zweiten Subabschnitt 23 vorgesehen sein. Die Beschichtung 20a kann die Reflexion der von der Strahlungsquelle 10 ausgesendeten oder ausgestrahlten elektromagnetischen Strahlung erhöhen. Der erste Subabschnitt 22 kann keine Beschichtung 20a aufweisen oder eine Beschichtung 20a aufweisen, die eine geringe Erhöhung der Reflexion der elektromagnetischen Strahlung verursacht.

Auch durch die Beschichtung 20a der Trennsäule 20 kann elektromagnetische Strahlung ausgehend von dem ersten Abschnitt 11 der Strahlungsquelle 10 von dem ersten Subabschnitt 22 der Trennsäule 20 mit einer höheren Intensität empfangen werden als elektromagnetische Strahlung ausgehend von dem zweiten Abschnitt 12 der Strahlungsquelle von dem zweiten Subabschnitt 23 der Trennsäule empfangen werden kann. Der erste Subabschnitt 22 kann stärker erwärmt werden als der zweite Subabschnitt 23.

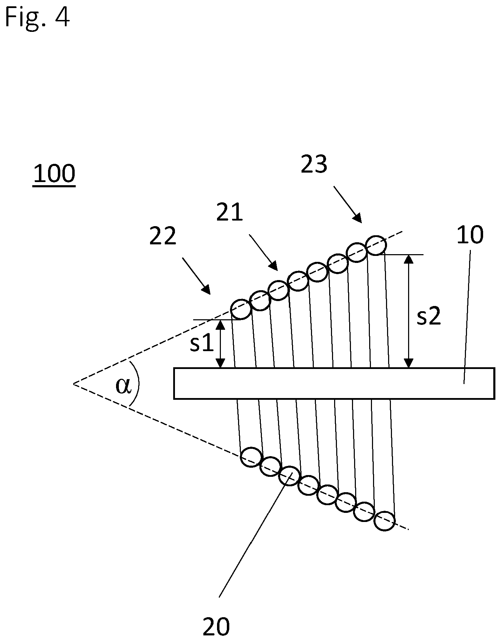

Fig. 4 zeigt schematisch eine Ausgestaltung eines Systems 100. Das System 100 ist ähnlich zu den bisher beschriebenen Systemen 100, sodass eine wiederholende Beschreibung gleicher Komponenten entfällt. Das System 100 der Fig. 4 kann eine oder mehrere Komponenten oder Merkmale jedes hierin offenbarten Systems 100 aufweisen.

In der Schnittdarstellung der Fig. 4 ist eine kontinuierliche Zunahme oder kontinuierliche Abnahme des Abstands zwischen dem ersten Abschnitt 21 der Trennsäule 20 und der Strahlungsquelle 10 gezeigt. Die kontinuierliche Zunahme oder kontinuierliche Abnahme kann gleichmäßig oder linear sein.

Der geringste Abstand s1 kann bei dem ersten Subabschnitt 22 vorliegen. Der größte Abstand s2 kann bei dem zweiten Subabschnitt 23 vorliegen. Der erste Subabschnitt 22 kann näher am Einlass der Trennsäule 20 vorliegen. Der zweite Subabschnitt 23 kann näher am Auslass der Trennsäule 20 vorliegen.

Die Zunahme oder Abnahme des Abstands zwischen dem ersten Abschnitt 21 der Trennsäule 20 und der Strahlungsquelle 10 kann durch einen Winkel α definiert sein. Der Winkel α kann zwischen zwei Schenkeln gebildet sein. Jeder der Schenkel kann eine gedachte Linie durch zumindest zwei benachbarte Wicklungen, insbesondere zumindest fünf benachbarte Wicklungen, der Trennsäule 20 des ersten Abschnitts 21 sein. Die Schenkel schneiden sich dabei in einem Punkt. Der Winkel α kann zwischen 1 ° und 70 °, bevorzugt zwischen 1 ° und 60 °, bevorzugter zwischen 1 ° und 50 °, bevorzugter zwischen 5 ° und 40 °, bevorzugter zwischen 5 ° und 30 °, bevorzugter zwischen 5 ° und 20 °, betragen.

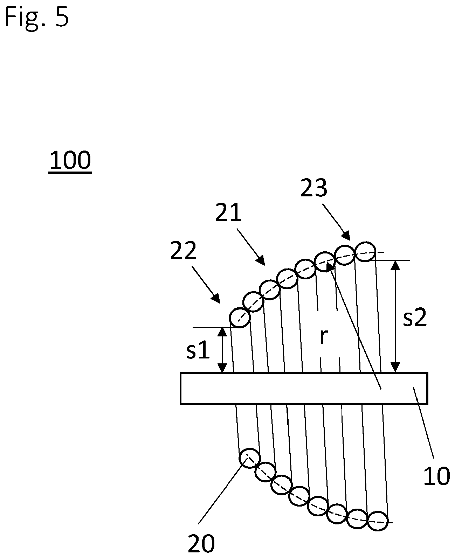

Fig. 5 zeigt schematisch eine Ausgestaltung eines Systems 100. Das System 100 ist ähnlich zu den bisher beschriebenen Systemen 100, sodass eine wiederholende Beschreibung gleicher Komponenten entfällt. Das System 100 der Fig. 5 kann eine oder mehrere Komponenten oder Merkmale jedes hierin offenbarten Systems 100 aufweisen.

In der Schnittdarstellung der Fig. 5 ist eine kontinuierliche Zunahme oder kontinuierliche Abnahme des Abstands zwischen dem ersten Abschnitt 21 der Trennsäule 20 und der Strahlungsquelle 10 gezeigt. Die kontinuierliche Zunahme oder kontinuierliche Abnahme kann ungleichmäßig oder nicht-linear sein.

Der geringste Abstand s1 kann bei dem ersten Subabschnitt 22 vorliegen. Der größte Abstand s2 kann bei dem zweiten Subabschnitt 23 vorliegen. Der erste Subabschnitt 22 kann näher am Einlass der Trennsäule 20 vorliegen. Der zweite Subabschnitt 23 kann näher am Auslass der Trennsäule 20 vorliegen.

In der Nähe des Einlasses der Trennsäule 20 kann die Zunahme oder Abnahme des Abstands stärker ausgeprägt sein als in der Nähe des Auslasses der Trennsäule 20. Alternativ kann in der Nähe des Einlasses der Trennsäule 20 die Zunahme oder Abnahme des Abstands weniger stark ausgeprägt sein als in der Nähe des Auslasses der Trennsäule 20.

Insbesondere kann die Zunahme oder Abnahme des Abstands zumindest abschnittsweise in dem ersten Abschnitt 21 der Trennsäule 20 durch einen Radius r beschrieben werden. Der Umfang des Radius r kann auf einer gedachten Linie durch zumindest zwei benachbarte Wicklungen, insbesondere zumindest fünf benachbarte Wicklungen, der Trennsäule 20 des ersten Abschnitts 21 liegen. Der Startpunkt des Radius r (der Mittelpunkt des durch den Radius r definierten Kreises) kann von dem ersten Abschnitt 21 der Trennsäule 20 umgeben sein oder außerhalb des ersten Abschnitts 21 der Trennsäule vorliegen.

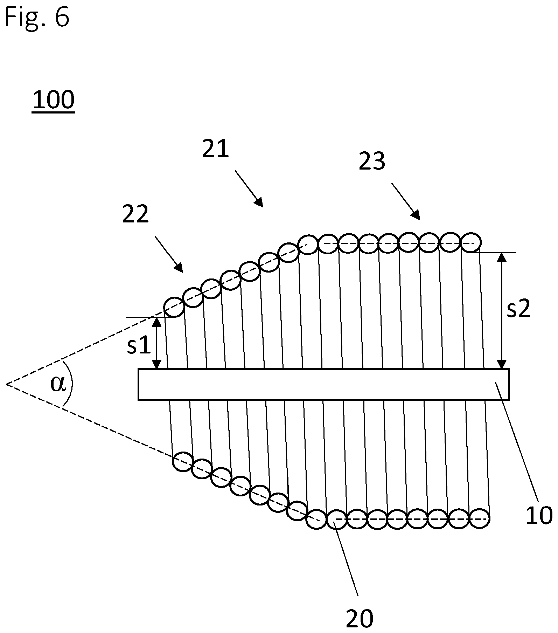

Fig. 6 zeigt schematisch eine Ausgestaltung eines Systems 100. Das System 100 ist ähnlich zu den bisher beschriebenen Systemen 100, sodass eine wiederholende Beschreibung gleicher Komponenten entfällt. Das System 100 der Fig. 6 kann eine oder mehrere Komponenten oder Merkmale jedes hierin offenbarten Systems 100 aufweisen.

In der Schnittdarstellung der Fig. 6 ist in dem ersten Subabschnitt 22 eine kontinuierliche Zunahme oder kontinuierliche Abnahme des Abstands zwischen dem ersten Abschnitt 21 der Trennsäule 20 und der Strahlungsquelle 10 gezeigt. Die kontinuierliche Zunahme oder kontinuierliche Abnahme kann gleichmäßig oder linear sein. In dem zweiten Subabschnitt 23 kann der Abstand s2 konstant sein.

Allgemein kann der erste Abschnitt 21 der Trennsäule 20 Subabschnitte mit unterschiedlichen Abstandsentwicklungen zwischen der Trennsäule 20 und der Strahlungsquelle 10 aufweisen. Beispielsweise kann der Abstand zwischen der Trennsäule 20 und der Strahlungsquelle 10 in dem ersten Subabschnitt 22 zunehmen oder abnehmen und der Abstand zwischen der Trennsäule 20 und der Strahlungsquelle 10 in dem zweiten Subabschnitt 23 konstant sein. Alternativ kann der Abstand zwischen der Trennsäule 20 und der Strahlungsquelle 10 in dem zweiten Subabschnitt 23 zunehmen oder abnehmen und der Abstand zwischen der Trennsäule 20 und der Strahlungsquelle 10 in dem ersten Subabschnitt 22 konstant sein.

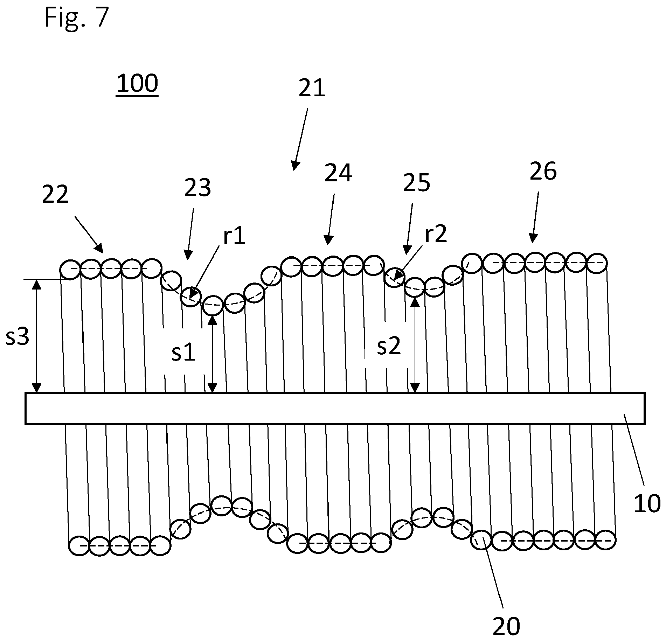

Fig. 7 zeigt schematisch eine Ausgestaltung eines Systems 100. Das System 100 ist ähnlich zu den bisher beschriebenen Systemen 100, sodass eine wiederholende Beschreibung gleicher Komponenten entfällt. Das System 100 der Fig. 7 kann eine oder mehrere Komponenten oder Merkmale jedes hierin offenbarten Systems 100 aufweisen.

In der Schnittdarstellung der Fig. 7 ist ein erster Abschnitt 21 einer Trennsäule 20 gezeigt. Der erste Abschnitt 21 kann einen ersten Subabschnitt 22, einen zweiten Subabschnitt 23, einen dritten Subabschnitt 24, einen vierten Subabschnitt 25 und einen fünften Subabschnitt 26 umfassen.

In dem ersten Subabschnitt 22, dem dritten Subabschnitt 24 und dem fünften Subabschnitt 26 kann der Abstand s3 zwischen der Trennsäule 20 und der Strahlungsquelle 10 konstant sein.

Zwischen dem ersten Subabschnitt 22 und dem dritten Subabschnitt 24 kann der zweite Subabschnitt 23 gebildet sein. In dem zweiten Subabschnitt 23 kann sich der Abstand s1 zwischen der Trennsäule 20 und der Strahlungsquelle 10 verändern. Die Veränderung des Abstands s1 kann durch einen Radius r1 beschrieben werden. Der Umfang des Radius r1 kann auf einer gedachten Linie durch zumindest zwei benachbarte Wicklungen, insbesondere zumindest fünf benachbarte Wicklungen, des zweiten Subabschnitts 23 liegen. Der Startpunkt des Radius r1 (der Mittelpunkt des durch den Radius r1 definierten Kreises) kann außerhalb des ersten Abschnitts 21 der Trennsäule 20 vorliegen.

Zwischen dem dritten Subabschnitt 24 und dem fünften Subabschnitt 26 kann der vierte Subabschnitt 25 gebildet sein. In dem vierten Subabschnitt 25 kann sich der Abstand s2 zwischen der Trennsäule 20 und der Strahlungsquelle 10 verändern. Die Veränderung des Abstands s2 kann durch einen Radius r2 beschrieben werden. Der Umfang des Radius r2 kann auf einer gedachten Linie durch zumindest zwei benachbarte Wicklungen, insbesondere zumindest fünf benachbarte Wicklungen, des vierten Subabschnitts 25 liegen. Der Startpunkt des Radius r2 (der Mittelpunkt des durch den Radius r2 definierten Kreises) kann außerhalb des ersten Abschnitts 21 der Trennsäule 20 vorliegen.

Der Radius r1 des zweiten Subabschnitts 23 kann größer sein als der Radius r2 des vierten Subabschnitts 25. Alternativ kann der Radius r1 des zweiten Subabschnitts 23 kleiner sein als der Radius r2 des vierten Subabschnitts 25.

Keiner der Subabschnitte 22 bis 26 ist zwingend notwendig. Zumindest zwei beliebige der Subabschnitte 22 bis 26 sind ausreichend.

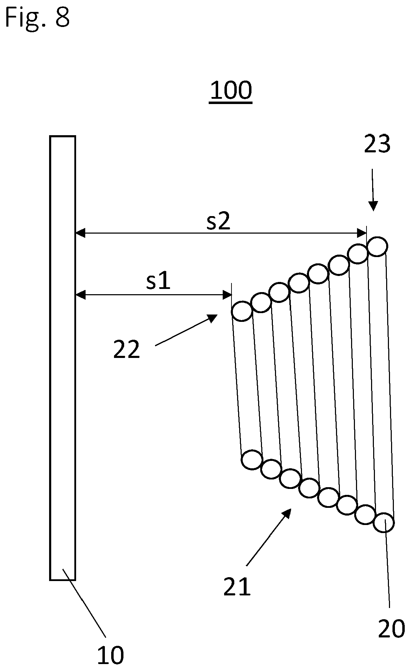

Fig. 8 zeigt schematisch eine Ausgestaltung eines Systems 100. Das System 100 ist ähnlich zu den bisher beschriebenen Systemen 100, sodass eine wiederholende Beschreibung gleicher Komponenten entfällt. Das System 100 der Fig. 8 kann eine oder mehrere Komponenten oder Merkmale jedes hierin offenbarten Systems 100 aufweisen.

In dem Beispiel der Fig. 8 kann der erste Abschnitt 21 der Trennsäule 20 wendelförmig oder helixförmig ausgebildet sein. Die Strahlungsquelle 10 kann flächig ausgestaltet sein, beispielsweise als Rundlampe, ein Flächenstrahler oder ein Lampenarray. Der erste Abschnitt 21 der Trennsäule 20 kann die Strahlungsquelle 10 nicht umgeben. Mit anderen Worten, die Strahlungsquelle 10 kann außerhalb des ersten Abschnitts 21 der Trennsäule 20 angeordnet sein.

Der erste Abschnitt 21 der Trennsäule 20 kann so zu der Strahlungsquelle 10 angeordnet sein, dass ein erster Subabschnitt 22 der Trennsäule 20 einen Abstand s1 zu der Strahlungsquelle 10 aufweist und ein zweiter Subabschnitt 23 der Trennsäule einen Abstand s2 zu der Strahlungsquelle 10 aufweist. Der Abstand s1 zwischen der Strahlungsquelle 10 und dem ersten Subabschnitt 22 kann kleiner sein als der Abstand s2 zwischen der Strahlungsquelle 10 und dem zweiten Subabschnitt 23. Dadurch kann der erste Subabschnitt 22 eine höhere Intensität von elektromagnetischer Strahlung von der Strahlungsquelle 10 empfangen als der zweite Subabschnitt 23. Der erste Subabschnitt 22 kann stärker erwärmt werden als der zweite Subabschnitt 23.

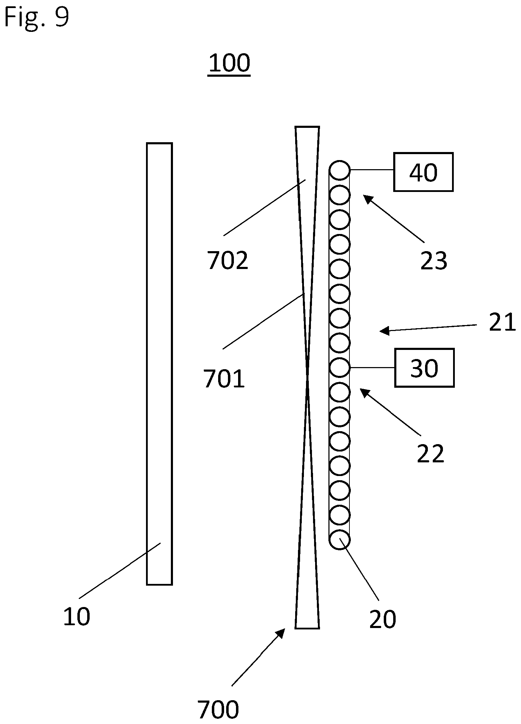

Fig. 9 zeigt schematisch eine Ausgestaltung eines Systems 100. Das System 100 ist ähnlich zu den bisher beschriebenen Systemen 100, sodass eine wiederholende Beschreibung gleicher Komponenten entfällt. Das System 100 der Fig. 9 kann eine oder mehrere Komponenten oder Merkmale jedes hierin offenbarten Systems 100 aufweisen.

Der erste Abschnitt 21 der Trennsäule 20 kann spiralförmig ausgebildet sein. Bevorzugt ist der erste Abschnitt 21 der Trennsäule flächig ausgestaltet.

Die Strahlungsquelle 10 kann flächig ausgestaltet sein, beispielsweise als Rundlampe, ein Flächenstrahler oder ein Lampenarray. Der erste Abschnitt 21 der Trennsäule 20 kann die Strahlungsquelle 10 nicht umgeben. Mit anderen Worten, die Strahlungsquelle 10 kann außerhalb des ersten Abschnitts 21 der Trennsäule 20 angeordnet sein.

Ein Abstand zwischen dem ersten Subabschnitt 22 und der Strahlungsquelle 10 kann gleich sein zu dem Abstand zwischen dem zweiten Subabschnitt 23 und der Strahlungsquelle 10.

Zwischen der Strahlungsquelle 10 und dem ersten Abschnitt 21 der Trennsäule 20 kann ein Abschirmelement 700 angeordnet sein. Das Abschirmelement 700 kann ein Verschattungselement, ein Filter, ein semitransparentes Element und/oder ein Element mit einer Beschichtung sein. Das Abschirmelement 700 kann einen ersten Abschnitt 701 und einen zweiten Abschnitt 702 aufweisen. Die transmissiven Eigenschaften für die elektromagnetische Strahlung der Strahlungsquelle können sich in einem ersten Abschnitt 701 des Abschirmelements und in einem zweiten Abschnitt 702 des Abschirmelements 700 unterscheiden.

Der erste Abschnitt 701 des Abschirmelements 700 kann elektromagnetische Strahlung von der Strahlungsquelle 10 weniger stark abschirmen als der zweite Abschnitt 701 des Abschirmelements 700. Der erste Abschnitt 701 des Abschirmelements 700 kann dem ersten Subabschnitt 22 der Trennsäule 20 zugeordnet sein. Der zweite Abschnitt 702 des Abschirmelements 700 kann dem zweiten Subabschnitt 23 der Trennsäule 20 zugeordnet sein. Dadurch kann der erste Subabschnitt 22 der Trennsäule 20 elektromagnetische Strahlung von der Strahlungsquelle mit einer höheren Intensität empfangen als der zweite Subabschnitt 23.

Der erste Subabschnitt 22 der Trennsäule 20 kann näher an dem Einlass 30 der Trennsäule 20 angeordnet sein als an dem Auslass 40 der Trennsäule 20. Der zweite Subabschnitt 23 der Trennsäule 20 kann näher an dem Auslass 40 der Trennsäule 20 angeordnet sein als an dem Einlass 30 der Trennsäule 20.

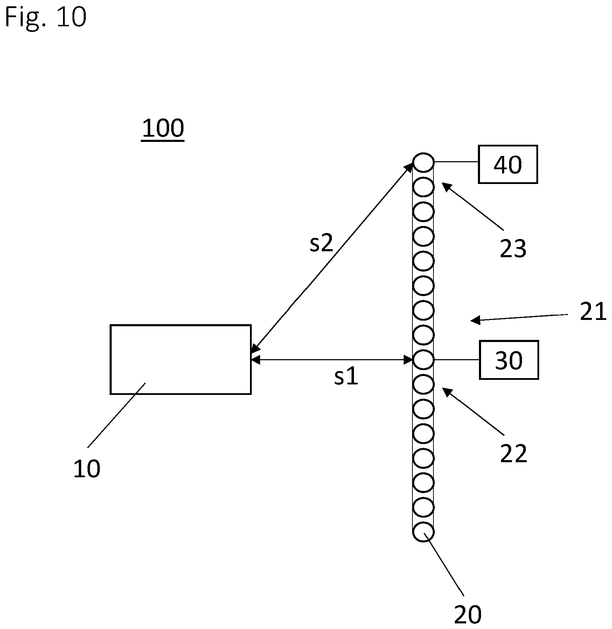

Fig. 10 zeigt schematisch eine Ausgestaltung eines Systems 100. Das System 100 ist ähnlich zu den bisher beschriebenen Systemen 100, sodass eine wiederholende Beschreibung gleicher Komponenten entfällt. Das System 100 der Fig. 10 kann eine oder mehrere Komponenten oder Merkmale jedes hierin offenbarten Systems 100 aufweisen.

Der erste Abschnitt 21 der Trennsäule 20 kann spiralförmig ausgebildet sein. Bevorzugt ist der erste Abschnitt 21 der Trennsäule flächig ausgestaltet. Die Strahlungsquelle 10 kann als Punktstrahlungsquelle ausgebildet sein.

Zwischen dem ersten Subabschnitt 22 der Trennsäule 20 und der Strahlungsquelle 10 kann ein Abstand s1 bestehen. Zwischen dem zweiten Subabschnitt 23 der Trennsäule 20 und der Strahlungsquelle 10 kann ein Abstand s2 bestehen. Der Abstand s1 zwischen dem ersten Subabschnitt 22 der Trennsäule 20 und der Strahlungsquelle 10 kann kleiner sein als der Abstand s2 zwischen dem zweiten Subabschnitt 23 der Trennsäule 20 und der Strahlungsquelle 10. Dadurch kann der erste Subabschnitt 22 stärker von der elektromagnetischen Strahlung der Strahlungsquelle 10 erwärmt werden als der zweite Subabschnitt 23.

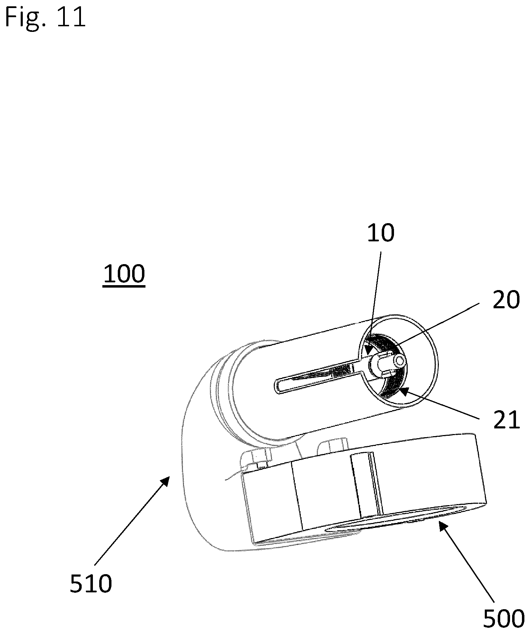

Fig. 11 zeigt eine Ausgestaltung eines System 100. Das System 100 ist ähnlich zu den bisher beschriebenen Systemen 100, sodass eine wiederholende Beschreibung gleicher Komponenten entfällt. Das System 100 der Fig. 11 kann eine oder mehrere Komponenten oder Merkmale jedes hierin offenbarten Systems 100 aufweisen.

Die Strahlungsquelle 10 des Systems 100 kann stabförmig ausgebildet sein. Der erste Abschnitt 21 der Trennsäule 20 kann wendelförmig oder helixförmig ausgebildet sein und insbesondere die Strahlungsquelle 10 umgeben.

Das System 100 kann einen Lüfter 500 umfassen. Der Lüfter 500 kann als Radiallüfter ausgebildet sein. Über ein Umlenkelement 510 kann ein radial aus dem Lüfter 500 austretender Luftstrom umgelenkt werden. Der umgelenkte Luftstrom kann die Strahlungsquelle 10 und/oder den ersten Abschnitt 21 der Trennsäule 20 in axialer Richtung der Strahlungsquelle 10 umströmen, um die Strahlungsquelle 10 und/oder den ersten Abschnitt 21 der Trennsäule 20 zu kühlen.

### Bezugszeichenliste

- 1000: System zur Analyse
- 10: Strahlungsquelle
- 10a: Beschichtung
- 11: erster Abschnitt
- 12: zweiter Abschnitt
- 20: Trennsäule
- 20a: Beschichtung
- 21: erster Abschnitt
- 22: erster Subabschnitt
- 23: zweiter Subabschnitt
- 30: Einlass
- 40: Auslass
- 100: System zur Trennung
- 200: Gasversorgungselement
- 300: Injektor
- 400: Ventil
- 500: Lüfter
- 510: Umlenkelement
- 600: Detektor
- 700: Abschirmelement
- 800: Gehäuse

## Patentansprüche

1. System (100) zur Trennung von Stoffen in einem Stoffgemisch, das System mit einer Strahlungsquelle (10) und einer Trennsäule (20), wobei:
- die Trennsäule (20) zumindest einen ersten Abschnitt (21) aufweist, wobei der erste Abschnitt (21) zumindest einen ersten Subabschnitt (22) und einen zweiten Subabschnitt (23) aufweist; wobei der erste Abschnitt (21) der Trennsäule (20) die Strahlungsquelle (10) umgibt;
- die Strahlungsquelle (10) eingerichtet ist, elektromagnetische Strahlung in Richtung des ersten Abschnitts (21) zu strahlen, um den ersten Abschnitt (21) zu erwärmen, wobei die elektromagnetische Strahlung Infrarotstrahlung umfasst; das System **gekennzeichnet dadurch, dass**:
- die elektromagnetische Strahlung in dem ersten Subabschnitt (22) der Trennsäule (20) mit einer höheren Intensität empfangbar ist als in dem zweiten Subabschnitt (23) der Trennsäule (20), sodass der erste Subabschnitt (22) stärker erwärmbar ist als der zweite Subabschnitt (23) und entlang des ersten Abschnitts (21) der Trennsäule (20) ein Temperaturgradient bildbar ist,
- wobei der erste Abschnitt (21) eine Länge entlang der Trennsäule (20) von zumindest 500 mm aufweist und die elektromagnetische Strahlung in dem ersten Abschnitt (21) der Trennsäule (20) so empfangbar ist, dass sich der Temperaturgradient entlang des ersten Abschnitts (21) einstellt.

2. System nach Anspruch 1, wobei ein Abstand (s1) zwischen dem ersten Subabschnitt (22) und der Strahlungsquelle (10) kleiner ist als ein Abstand (s2) zwischen dem zweiten Subabschnitt (22) und der Strahlungsquelle (10).

3. System nach Anspruch 1 oder 2, wobei ein Abstand zwischen der Trennsäule (20) und der Strahlungsquelle (10) in dem ersten Abschnitt (21) zumindest abschnittsweise zunimmt oder abnimmt, insbesondere über eine Länge der Trennsäule von zumindest 10 mm, bevorzugt zumindest 100 mm.

4. System nach einem der vorhergehenden Ansprüche, wobei die Trennsäule (20) zumindest abschnittsweise mit einer Beschichtung (20a) versehen ist, wobei die Beschichtung (20a) die Intensität der empfangbaren elektromagnetischen Strahlung beeinflusst.

5. System nach einem der vorhergehenden Ansprüche, wobei die Strahlungsquelle (10) einen ersten Abschnitt (11) und einen zweiten Abschnitt (12) aufweist, wobei der erste Abschnitt (11) eingerichtet ist, elektromagnetische Strahlung in Richtung des ersten Subabschnitts (22) mit einer höheren Intensität auszusenden als der zweite Abschnitt (12) eingerichtet ist, elektromagnetische Strahlung in Richtung des zweiten Subabschnitts (23) auszusenden.

6. System nach einem der vorhergehenden Ansprüche, wobei zwischen der Strahlungsquelle (10) und der Trennsäule (20) ein Abschirmelement (700) angeordnet ist, wobei das Abschirmelement (700) eingerichtet ist einen Teil der elektromagnetischen Strahlung der Strahlungsquelle (10) abzuschirmen.

7. Verfahren zur Trennung von Stoffen in einem Stoffgemisch, das Verfahren mit den Schritten:
- Einbringen des Stoffgemisches in einen Einlass (30) einer Trennsäule (20);
- Einstrahlen von elektromagnetischer Strahlung umfassend Infrarotstrahlung ausgehend von einer Strahlungsquelle (10) auf zumindest einen ersten Abschnitt (21) der Trennsäule (20), um den ersten Abschnitt (21) zu erwärmen, wobei die Trennsäule (20) die elektromagnetische Strahlung in einem ersten Subabschnitt (22) des ersten Abschnitts (21) mit einer höheren Intensität empfängt als in einem zweiten Subabschnitt (23) des ersten Abschnitts (21), sodass der erste Subabschnitt (22) stärker erwärmt wird als der zweite Subabschnitt (23) und entlang des ersten Abschnitts (21) der Trennsäule (20) ein Temperaturgradient gebildet wird, wobei der erste Abschnitt (21) der Trennsäule (20) die Strahlungsquelle (10) umgibt, wobei der erste Abschnitt (21) eine Länge entlang der Trennsäule (20) von zumindest 500 mm aufweist und die elektromagnetische Strahlung in dem ersten Abschnitt (21) der Trennsäule (20) so empfangen wird, dass sich der Temperaturgradient kontinuierlich entlang des ersten Abschnitts (21) einstellt; und
- Ausbringen des aufgetrennten Stoffgemisches aus einem Auslass (40) der Trennsäule (20).

8. Verfahren nach Anspruch 7, wobei bei dem Temperaturgradienten ein Temperaturunterschied von zumindest 5 °C gebildet ist.

9. Verfahren nach Anspruch 8, wobei zur Bestimmung des Temperaturunterschieds die Temperatur an einer ersten Position der Trennsäule (20) mit einer Temperatur an einer zweiten Position der Trennsäule (20) verglichen wird und zwischen der ersten Position der Trennsäule (20) und der zweiten Position der Trennsäule (20) ein Abstand entlang der Trennsäule von zumindest 500 mm liegt.

10. Verfahren zur Analyse von Stoffen in einem Stoffgemisch, das Verfahren mit den Schritten:
- Durchführen des Verfahrens von Anspruch 7,8 oder 9, und
- Detektieren, durch einen Detektor (600), von Stoffen in dem aufgetrennten Stoffgemisch.

## Claims

1. A system (100) for separating substances in a substance mixture, said system having a radiation source (10) and a separation column (20), wherein
- said separation column (20) comprises at least a first section (21), said first section (21) comprising at least a first subsection (22) and a second subsection (23); wherein said first section (21) of said separation column (20) surrounds said radiation source (10);
- said radiation source (10) is configured to radiate electromagnetic radiation in the direction of said first section (21) to heat said first section (21), said electromagnetic radiation comprising infrared radiation; the system being **characterized in that**:
- said electromagnetic radiation is receivable in said first subsection (22) of said separation column (20) with a higher intensity than in said second subsection (23) of said separation column (20), so that said first subsection (22) is heatable more intensively than said second subsection (23) and a temperature gradient can be formed along said first section (21) of said separation column (20),
- wherein said first section (21) has a length along said separation column (20) of at least 500 mm and said electromagnetic radiation is receivable in said first section (21) of said separation column (20) so that said temperature gradient is formed along said first section (21).

2. The system according to claim 1, wherein an interval (s1) between said first subsection (22) and said radiation source (10) is smaller than an interval (s2) between said second subsection (22) and said radiation source (10).

3. The system according to claim 1 or 2, wherein an interval between said separation column (20) and said radiation source (10) in said first section (21) increases or decreases at least in sections, especially over a length of said separation column of at least 10 mm, preferably at least 100 mm.

4. The system according to any one of the preceding claims, wherein said separation column (20) is provided with a coating (20a) at least in sections, said coating (20a) affecting the intensity of the receivable electromagnetic radiation.

5. The system according to any one of the preceding claims, said radiation source (10) comprising a first section (11) and a second section (12), wherein said first section (11) is configured to emit electromagnetic radiation in the direction of said first subsection (22) with a higher intensity than said second section (12) is configured to emit electromagnetic radiation in the direction of said second subsection (23).

6. The system according to any one of the preceding claims, wherein a shield member (700) is arranged between said radiation source (10) and said separation column (20), said shield member (700) being configured to shield part of the electromagnetic radiation of said radiation source (10).

7. A method for separating substances in a substance mixture, the method comprising the steps of:
- introducing said substance mixture to an inlet (30) of a separation column (20);
- radiating electromagnetic radiation comprising infrared radiation emanating from a radiation source (10) to at least a first section (21) of said separation column (20) to heat said first section (21), said separation column (20) receiving said electromagnetic radiation in a first subsection (22) of said first section (21) with a higher intensity than in a second subsection (23) of said first section (21), so that said first subsection (22) is heated more intensively than said second subsection (23) and a temperature gradient is formed along said first section (21) of said separation column (20), wherein said first section (21) of said separation column (20) surrounds said radiation source (10), wherein said first section (21) has a length along said separation column (20) of at least 500 mm and said electromagnetic radiation is receivable in said first section (21) of said separation column (20) so that said temperature gradient is formed continuously along said first section (21); and
- deploying said separated substance mixture from an outlet (40) of said separation column (20).

8. The method of claim 7, wherein a temperature difference of at least 5 °C is formed at said temperature gradient.

9. The system of claim 8, wherein for determining said temperature difference, the temperature at a first position of said separation column (20) is compared with a temperature at a second position of said separation column (20) and between said first position of said separation column (20) and said second position of said separation column (20), there is a distance along said separation column of at least 500 mm.

10. A method for analyzing substances in a substance mixture, the method with the steps of:
- performing the method of claim 7, 8 or 9; and
- detecting, by a detector (600), substances in said separated substance mixture.

## Revendications

1. Système (100) destiné à séparer des substances dans un mélange de substances, le système ayant une source de rayonnement (10) et une colonne de séparation (20), dans lequel :
- la colonne de séparation (20) comporte au moins une première section (21), dans lequel la première section (21) comporte au moins une première sous-section (22) et une seconde sous-section (23) ; dans lequel la première section (21) de la colonne de séparation (20) entoure la source de rayonnement (10) ;
- la source de rayonnement (10) est configurée pour faire rayonner un rayonnement électromagnétique en direction de la première section (21) afin de chauffer la première section (21), dans lequel le rayonnement électromagnétique comprend un rayonnement infrarouge ; le système étant **caractérisé en ce que** :
- le rayonnement électromagnétique dans la première sous-section (22) de la colonne de séparation (20) peut être reçu avec une intensité plus élevée que dans la seconde sous-section (23) de la colonne de séparation (20), de telle sorte que la première sous-section (22) peut être chauffée plus intensément que la seconde sous-section (23) et un gradient de température peut être formé le long de la première section (21) de la colonne de séparation (20),
- dans lequel la première section (21) a une longueur d'au moins 500 mm le long de la colonne de séparation (20) et le rayonnement électromagnétique dans la première section (21) de la colonne de séparation (20) peut être reçu de telle sorte que le gradient de température est obtenu le long de la première section (21).

2. Système selon la revendication 1, dans lequel une distance (s1) entre la première sous-section (22) et la source de rayonnement (10) est inférieure à une distance (s2) entre la seconde sous-section (22) et la source de rayonnement (10).

3. Système selon la revendication 1 ou 2, dans lequel une distance entre la colonne de séparation (20) et la source de rayonnement (10) dans la première section (21) augmente ou diminue au moins dans certaines zones, en particulier sur une longueur de la colonne de séparation d'au moins 10 mm, de préférence d'au moins 100 mm.

4. Système selon l'une des revendications précédentes, dans lequel la colonne de séparation (20) est garnie d'un revêtement (20a) au moins dans certaines zones, dans lequel le revêtement (20a) influe sur l'intensité du rayonnement électromagnétique pouvant être reçu.

5. Système selon l'une des revendications précédentes, dans lequel la source de rayonnement (10) comporte une première section (11) et une seconde section (12), dans lequel la première section (11) est configurée pour émettre un rayonnement électromagnétique en direction de la première sous-section (22) avec une intensité plus élevée que la seconde section (12) et pour émettre un rayonnement électromagnétique en direction de la seconde sous-section (23).

6. Système selon l'une des revendications précédentes, dans lequel un élément de protection (700) est disposé entre la source de rayonnement (10) et la colonne de séparation (20), dans lequel l'élément de protection (700) est configuré pour protéger une partie du rayonnement électromagnétique de la source de rayonnement (10).

7. Procédé pour séparer des substances dans un mélange de substances, le procédé comportant les étapes consistant à :
- introduire le mélange de substances dans une entrée (30) d'une colonne de séparation (20) ;
- projeter un rayonnement électromagnétique comprenant un rayonnement infrarouge émanant d'une source de rayonnement (10) sur au moins une première section (21) de la colonne de séparation (20) afin de chauffer la première section (21), dans lequel la colonne de séparation (20) reçoit le rayonnement électromagnétique dans une première sous-section (22) de la première section (21) avec une intensité plus élevée que dans une seconde sous-section (23) de la première section (21), de telle sorte que la première sous-section (22) est chauffée plus intensément que la seconde sous-section (23) et un gradient de température est formé le long de la première section (21) de la colonne de séparation (20), dans lequel la première section (21) de la colonne de séparation (20) entoure la source de rayonnement (10), dans lequel la première section (21) a une longueur d'au moins 500 mm le long de la colonne de séparation (20) et le rayonnement électromagnétique dans la première section (21) de la colonne de séparation (20) est reçu de telle sorte que le gradient de température est obtenu en continu le long de la première section (21) ; et
- extraire le mélange séparé d'une sortie (40) de la colonne de séparation (20).

8. Procédé selon la revendication 7, dans lequel une différence de température d'au moins 5 °C est formée au gradient de température.

9. Procédé selon la revendication 8, dans lequel, pour déterminer la différence de température, la température à une première position de la colonne de séparation (20) est comparée à une température à une seconde position de la colonne de séparation (20) et il y a une distance d'au moins 500 mm le long de la colonne de séparation entre la première position de la colonne de séparation (20) et la seconde position de la colonne de séparation (20).

10. Procédé d'analyse de substances dans un mélange de substances, le procédé comportant les étapes consistant à :
- mettre en œuvre le procédé de la revendication 7, 8 ou 9, et
- détecter, par un détecteur (600), des substances dans le mélange de substances séparé.
